(19) Europäisches Patentamt
European Patent Office
Office européen des brevets

(11) Veröffentlichungsnummer: **0 273 166 B1**

# (12) EUROPÄISCHE PATENTSCHRIFT

(45) Veröffentlichungstag der Patentschrift: **13.03.91**

(51) Int. Cl.$^{5}$: **G06F 9/46**, G06F 15/40

(21) Anmeldenummer: **87116740.9**

(22) Anmeldetag: **12.11.87**

## (54) Verfahren und Anordnung zum Vermeiden von globalen Systemverklemmungen in verteilten Datenbanksystemen.

(30) Priorität: **14.11.86 DE 3638860**

(43) Veröffentlichungstag der Anmeldung:
**06.07.88 Patentblatt 88/27**

(45) Bekanntmachung des Hinweises auf die Patenterteilung:
**13.03.91 Patentblatt 91/11**

(84) Benannte Vertragsstaaten:
**AT BE CH DE FR GB IT LI NL SE**

(56) Entgegenhaltungen:

**JOURNAL OF TELECOMMUNICATION NETWORKS, Band 2, Nr. 3, 1983, Seiten 295-304, Rockville, US; W.W. CHU et al.: "Design considerations for shared integrated database systems (SIDS)1"**

**IEEE TRANSACTIONS ON SOFTWARE ENGINEERING, Band SE-11, Nr. 7, Juli 1985, IEEE, New York, US; B. WAH et al.: "Design of distributed data-bases M local computer systems with a multiaccess network"**

**IEEE TRANSACTIONS ON SOFTWARE ENGINEERING, Band SE-8, Nr. 6, November 1982, Seiten 554-557, IEEE, New York, US; G. HO et al.: "Protocols for deadlock detection in distributed database systems"**

**"Verteilte Datenbanksysteme", Informatik-spektrum, Springer Verlag, 1984, Band 7, Heft 1, Seiten 1-19**

(73) Patentinhaber: **Siemens Aktiengesellschaft**
**Wittelsbacherplatz 2**
**W-8000 München 2(DE)**

(72) Erfinder: **Karl, Dietmar**
**Westendstrasse 5**
**W-8011 Eglharting(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services

**Beschreibung**

Verfahren und Anordnung zum Vermeiden von globalen Systemverklemmungen in verteilten Datenbanksystemen

Die Erfindung betrifft ein Verfahren und eine Anordnung zum Vermeiden von globalen Systemverklemmungen bei der Verarbeitung von globalen Transaktionen in verteilten Datenbanksystemen mit mehreren Knoten gemäß dem Oberbegriff des Patentanspruches 1.

Bei der Realisierung von verteilten Datenbanksystemen stellt sich eine Reihe von technischen Problemen. Eines dieser Probleme besteht in der Synchronisation konkurrierender globaler Transaktionen, insbesondere im Vermeiden von globalen Systemverklemmungen (deadlock), weil zum Beispiel zwei oder mehr Transaktionen einander blokkierend auf die Freigabe gesperrter Objekte warten, um selbst weiterarbeiten zu können - "Informatik-Spektrum", Springer Verlag, 1981, Heft 4, Seiten 175 bis 184 und 261 bis 270 sowie 1984, Heft 7, Seiten 1 bis 19 oder "Computing Serveys, Vol. 13 No. 2 June 1981, Seiten 149 bis 183.

Zu dem genannten Zweck sind bereits eine ganze Reihe von Verfahren entwickelt worden. Eines dieser Verfahren besteht in einer Art Zeitablaufüberwachung im jeweiligen Ursprungsknoten, indem eine Transaktion nach Überschreiten einer vorgegebenen Wartezeit ohne Rückantwort einfach abgebrochen wird, wobei mit jedem Abbruch ein Rücksetzen von Transaktionen und eine Wiederholung verbunden ist. Bei einem solchen Verfahren kann nicht ausgeschlossen werden, daß nur deshalb eine Zeitüberschreitung stattfindet, weil eben die augenblickliche Systemlast zu hoch ist, ohne daß die Gefahr einer Systemverklemmung gegeben ist. Das damit verbundene, aber unnötige Rücksetzen von Transkationen und insbesondere die dadurch bedingte Wiederholung vergrößern dann noch die bestehende Systemlast - man siehe zum Beispiel Informatik-Spektrum, Seite 182, Abschn. 3.3.1 oder Computing Surveys, Seite 157, letzter Absatz der linken Spalte.

Auch die durch die DE-OS 33 30 529.3 bekannte Lösung beruht auf dem Prinzip der Zeitablaufprüfung, auch wenn die Überwachung nicht im Ursprungsknoten einer globalen Transaktion durchgeführt wird, sondern jeweils in den eine Teiltransaktion ausführenden Fremdknoten unter der Voraussetzung, daß dort diese Teiltransaktion auf eine wartende Teiltransaktion einer anderen globalen Transaktion aufgelaufen ist. Zwar läßt sich dadurch die Wahrscheinlichkeit, daß eine Transaktion unnötig zurückgesetzt wird, vermindern. Ein unnötiges Zurücksetzen kann aber ebenfalls nicht ausgeschlossen werden, weil die Entscheidung darüber ebenfalls auf einer Vermutung beruht.

Andere Verfahren beruhen auf der Vergabe von Zeitstempeln. Trifft eine Transaktion auf die Sperre einer jüngeren Transaktion, dann wird die ältere Transaktion zurückgesetzt. Durch die ständige Zulassung jüngerer Transaktionen wächst mit zunehmendem Alter einer Transaktion daher zwangsläufig die Gefahr, daß sie zurückgesetzt wird. Mit dem Alter und der Anzahl der Konflikte steigt jedoch auch der Umfang einer Transaktion, so daß eine Wiederholung immer aufwendiger wird und das System im zunehmendem Maße belastet.

Demgegenüber stehen Verfahren, bei denen eine Transaktion nur dann zurückgesetzt wird, wenn tatsächlich eine Verklemmung gegeben ist. Diese Verfahren beruhen auf der Prüfung der jeweils im gesamten System gegebenen Abhängigkeit anhand von Graphen, zweckmäßig durch eine zentrale Stelle. Dies erfordert aber einen zusätzlichen umfangreichen und ständigen Nachrichtenaustausch über die jeweiligen Abhängigkeiten zwischen den einzelnen Knoten und/oder mit der zentralen Überwachungsstelle. Die sich daraus ergebende Belastung der Verbindungsleitung und der beträchtliche Aufwand für die Graphenverwaltung sind gleichfalls von Nachteil.

Aufgabe der Erfindung ist es daher, konkurrierende globale Transaktionen so zu steuern, daß ohne die Überwachung durch eine zentrale Stelle und bei nur sehr geringem, die Verbindungsleitungen zwischen den Knoten nicht merklich belastenden Nachrichtenaustausch globale Verklemmungen eindeutig erkennbar sind und Transaktionen nur zurückgesetzt werden, wenn eine Verklemmung tatsächlich gegeben ist.

Diese Aufgabe wird hinsichtlich des Verfahrens gemäß der Erfindung durch die Merkmale des Patentanspruches 1 gelöst.

Eine Anordnung Zur Durchfürung der Verfahrens ist Patentanspruch 10 enthalten.

Danach werden durch ein Sperrereignis bei der Abarbeitung einer globalen Transaktion alle nicht von der Sperre direkt betroffenen laufenden Subtransaktionen aufgrund der Sperrmeldungen in gleicher Weise als gesperrt behandelt und in die jeweils entsprechende lokale Wartegraphentabelle eingetragen, falls sie noch nicht eingetragen sind. Da diese übrigen Subtransaktionen sich wegen des erstmals aufgetretenen Sperrereignisses zwangsläufig im aktiven Zustand befinden, ihnen also lokale Datenobjekte zugewiesen sind, die daher für andere Subtransaktionen gesperrt sind, bilden sie in jedem Fall das "Endeglied" des jeweiligen Wartegraphen, so daß diese Wartegraphen durch die zusätzliche Zielangabe über den die Sperrung verursachenden Knoten mit dem dortigen lokalen Wartegraphen vorübergehend zu einem globalen Wartegraphen zusammengekoppelt werden, ohne daß weitergehende Nachrichten über Sperrbeziehungen in den einzelnen Knoten ausgetauscht werden müssen. Die Arbeitsleistung der zuständigen globalen Transaktionssteuerung wird dadurch nicht beeinträchtigt, da sie sich aufgrund des Sperrereignisses sowieso im Wartezustand befindet.

Globale Systemverklemmungen sind dabei nur zu erwarten, wenn ein lokaler Wartegraph mit wenigstens einem anderen zu einem globalen Wartegraphen zusammengekoppelt wird. Das kann aus zweierlei Anlässen möglich sein, nämlich dann, wenn das Endeglied eines bereits bestehenden lokalen Wartegraphen als "ENTFERNT GESPERRT" zu markieren ist, oder dann, wenn eine Subtransaktion auf einen bereits als "ENTFERNT GESPERRT" markierten Wartegraphen aufläuft. In beiden Fällen wird daher eine Verklemmungsanalyse eingeleitet, die schrittweise auf die durch die Zielangabe jeweils in Folge miteinander verbundenen lokalen Wartegraphen der betroffenen Knoten ausgedehnt wird, bis ein offenes Ende des lokalen Wartegraphen erreicht oder eine Verklemmung festgestellt wird.

Für die Durchführung einer Verklemmungsanalyse sind bei n betroffenen Knoten maximal n Meldungen zu versenden, wenn das die Verklemmungsanalyse auslösende Ereignis in der nachträglichen Markierung eines bereits bestehenden Wartegraphen als "EXTERN GESPERRT" besteht (geschlossene Verklemmungsanalyse). Bei einem Sperrereignis durch einen bereits als "EXTERN GESPERRT" markierten Wartegraphen sind es nur n - 1 Meldungen (lineare Verklemmungsanalyse), da die Entscheidung über die Einleitung der Verklemmungsanalyse vom neu hinzukommenden Einstiegsglied des Wartegraphen ausgeht.

Eine Übertragung zusätzlicher Nachrichten ist darüber hinaus nur erforderlich, wenn eine Verklemmung festgestellt wird, um eine Transaktion zurückzusetzen. Das gilt aber für alle bekannten Verfahren.

Das neue Lösungsprinzip beruht also gleichfalls auf einer Graphenmethode mit sicherer Erkennung von Systemverklemmungen. Es benötigt aber keine übergeordnete Graphenverwaltung des Systems, und die Anzahl der das System belastenden Nachrichten ist im Vergleich zu den bekannten Verfahren im Mittel geringer. Auch ist der Umfang der jeweils auszutauschenden Nachrichten sehr gering.

Letzteres gilt insbesondere auch bezüglich der Angaben zu den Verklemmungsanalyseaufträgen, wobei gemäß der Weiterbildung entsprechend Anspruch 2 lediglich zwei Identitätsangaben für zwei globale Transaktionen benötigt werden, nämlich eine gleichbleibende als Prüfkriterium und eine jeweils aus dem Endeglied des auftraggebenden Knoten ableitbare Identität zum Aufsuchen des zugehörigen Wartegraphen im anzusteuernden Knoten. Die Prüfung beschränkt sich dabei immer auf den Vergleich der Identität des jeweiligen endegliedes mit dem angelieferten Prüfkriterium. Besteht Übereinstimmung, dann besteht auch eine Verklemmungsschleife, die in bekannter Weise aufgetrennt werden muß.

Die auslösenden Anlässe für eine Verklemmungsanalyse sind nur notwendige Bedingungen. Sie besagen noch nicht, daß tatsächlich auch eine Systemverklemmung vorliegt. Folglich wird nicht jede sofort eingeleitete Verklemmungsanalyse zur Feststellung einer Verklemmung führen, insbesondere dann nicht, wenn das die Verklemmungsanalyse auslösende Sperrereignis nur von kurzer Dauer ist. Entsprechend der Weiterbildung der Erfindung gemäß Patentanspruch 3 werden daher die Sperr-Rückmeldungen an die steuernde globale Transaktionssteuerung um eine vorgegebene Zeitdauer verzögert und eine aufgrund desselben Sperrereignisses einzuleitende Verklemmungsanalyse nur freigegeben, wenn die auslösende Sperrbedingung nach der vorgegebenen Zeitdauer noch besteht. Das System wird auf diese Weise ebenfalls von unnötigen Nachrichten entlastet.

Andererseits kann bei sich überschneidenden Transaktionsaufträgen zweier globaler Transaktionen, die beide auf eine Sperre laufen, nicht ausgeschlossen werden, daß gleichzeitig zwei Verklemmungsanalysen gesstartet werden und eine bestehende Systemverklemmung gleichzeitig an verschiedenen Knoten festgestellt wird, so daß gegebenenfalls zwei Transaktionen zurückgestezt werden. Dies läßt sich durch die Weiterbildung der Erfindung gemäß Patentanspruch 4 so gut wie ausschließen.

Die hierbei verwendeten Zeitmarken weisen zwar eine Ähnlichkeit mit den Zeitstempeln bei dem einen vorangehend beschriebenen bekannten Verfahren auf. Im Gegensatz dazu dienen aber die hier verwendeten Zeitmarken nur als Vergleichswert zum Starten und Abbrechen einer Verklemmungsanalyse, nicht aber zur Festlegung der Reihenfolge der in den verschiedenen Knoten des Systems auftretenden Ereignisse. Die Uhren der einzelnen Knoten brauchen daher nicht miteinander synchronisiert zu sein. Gesteuert durch die Zeitmarken setzt sich in einer geschlossenen Wartegraphenschleife immer der Auslöseanlaß mit dem größeren Zeitwert in Schleifenrichtung über die örtlichen Zeitmarkenwerte hinweg und überrollt diese.

Das zuletzt genannte Verfahren vergrößert zwar den Umfang der Nachrichten um die zusätzlichen Zeitmarken und den Speicherbedarf für die Speicherung der örtlichen Zeitmarken je Wartegraphen. Dieser Mehraufwand geht aber einher mit der Vermeidung der Übersendung unnötiger Nachrichten und dem Zurücksetzen tatsächlich nur einer Transaktion im Falle einer festgestellten Verklemmung.

Gemäß Patentanspruch 5 wird dabei die günstigste lokal gesperrte Subtransaktion in dem Knoten zurückgesetzt, in dem die Verklemmung erkannt worden ist, nicht aber eine Subtransaktion in einem anderen Knoten, was zusätzlichen Aufwand für die Nachrichtenübertragung und eine Verzögerung des Rücksetzens bedingen würde.

Weitere Vorteile der Erfindung ergeben sich aus Weiterbildungen entsprechend den Patentansprüchen 6 bis 9, die sich auf die Ausnutzung der Kontrolleinrichtungen für die verteilte Verarbeitung für die verschiedenen Meldungen und Nachrichten, sowie für die Überwachung der Anlässe zur Einleitung einer Verklemmungsanalyse und für deren Durchführung beziehen, wobei die Kontrolleinrichtungen unabhängig von den Datenbanksteuereinrichtungen arbeiten, indem notwendige Informationen von beiden zugreifbar in Tabellen geführt werden. Auf diese Weise wird die eigentliche Datenverarbeitung innerhalb des verteilten Datenbanksystems durch den im Rahmen der Erfindung erforderlichen Nachrichtenaustausch zwischen den einzelnen Knoten nur äußerst geringfügig beeinträchtigt. Auch bleiben Verbindungsleitungsausfälle ohne Auswirkung, wenn im Falle eines nicht absetzbaren Verklemmungsanalyseauftrages die Markierung als "ENTFERNT GESPERRT" bei der den Auftrag auslösenden Subtransaktion wieder aufgehoben und diese damit wieder der normalen lokalen Zeitüberwachung zur Verhinderung von Dauersperren unterstellt wird.

Die Anordnung gemäß der Erfindung zur Durchführung der vorgenannten Verfahren ergibt sich aus Patentanspruch 10. Sie besteht aus einer Reihe von Einrichtungen, die ihren Aufgaben entsprechend teilweise der jeweiligen globalen Transaktionssteuerung und teilweise dem jeweiligen Knoten insgesamt zugeordnet sind. Diese Einrichtungen können in bekannter Weise durch speicherprogrammierte Abläufe realisiert werden.

Dabei bleibt die eigentliche Datenverarbeitung innerhalb des verteilten Datenbanksystems am wenigsten beeinträchtigt, wenn gemäß der Weiterbildung von Patentanspruch 11 die die einzelnen Steueraufgaben wahrnehmenden und dem jeweiligen Knoten insgesamt zugeordneten Einrichtungen als Teileinrichtungen weitestgehend den Kontrolleinrichtungen für die verteilte Verarbeitung zugeordnet und dadurch die Datenbanksteuereinrichtungen entsprechend entlastet werden, wobei gesonderte Auftragsspeicher und die mit Zugriffsmöglichkeiten sowohl durch die Datenbanksteuereinrichtungen als auch durch die Kontrolleinrichtungen versehene Wartegraphentabelle ein weitgehend unabhängiges Arbeiten der einzelnen Einrichtungen sichern.

Einzelheiten der Erfindung seien nachfolgend anhand von in der Zeichnung dargestellten Ausführungsbeispielen erläutert. Im einzelnen zeigen

FIG 1 ein Beispiel für einen sich über drei Knoten erstreckenden geschlossenen globalen Wartegraphen,

FIG 2 ein Ablaufdiagramm zur Erläuterung des der Erfindung zugrundeliegenden Lösungsprinzips mit Bezug auf FIG 1,

FIG 3 bis 5 Ablaufdiagramme in Anlehnung an das von FIG 2 beiVerwendung von zusätzlichen Zeitmarken für unterschiedliche gegenseitige Zeitverschiebungen der lokalen Uhren,

FIG 6 eine Strukturübersicht für einen Knoten des Datenbanksystems,

FIG 7 eine Übersicht der Verbindungsstrukturen von drei gemäß FIG 6 strukturierten Knoten mit einer globalen Transaktionssteuerung GTS in einem der Knoten,

FIG 8A ein Ablaufdiagramm der globalen Transaktionssteuerung

und 8B GTS von FIG 6 für die Bearbeitung von Transaktionen,

FIG 9 ein Ablaufdiagramm der Datenbanksteuereinrichtungen DBMS von FIG 6 für die Bearbeitung von Datenbankaufträgen der globalen Transaktionssteuerung,

FIG 10 Ablaufdiagramme der Kontrolleinrichtungen DCN von FIG 3

bis 14 von FIG 3 für die Bearbeitung der verschiedenen Aufgaben gemäß dem der Erfindung zugrundeliegenden Verfahren,

FIG 15 den schematischen Aufbau einer Wartegraphentabelle,

FIG 16 den schematischen Aufbau einer Auftragstabelle für Sperr-Rückmeldungen und

FIG 17 den schematischen Aufbau einer Auftragstabelle für Verklemmungsanalysen.

FIG 1 zeigt die sich ergebende Wartekonstellation in einem verteilten Datenbanksytem mit drei Knoten K1, K2 und K3, wenn in jedem Knoten eine globale Transaktion GTA, die mit T1 bzw. T2 bzw. T3 bezeichnet sind unter Aufsicht der jeweiligen globalen Transaktionssteuerung durchgeführt wird. Jede dieser globalen Transaktionen arbeitet zunächst mit einer Subtransaktion STAll bzw. STA21 bzw. STA31 im eigenen Knoten und sperrt dort ein Datenobjekt OB, nämlich die Objekte A bzw. B bzw. C. Danach will die Globaltransaktion Tl mit einer zweiten Subtransaktion STA12 auf das Objekt B im Knoten K2, die Transaktion T2 mit einer zweiten Subtransaktion STA22 auf das Objekt C im Knoten K3 und die Transaktion T3 mit einer zweiten Subtransakton STA32 auf das Objekt A im Knoten K1 zugreifen. Da aber alle drei Objekte A, B und C bereits gesperrt sind, können die Subtransaktion STA12, STA22 und STA32 nicht bearbeitet werden.

Die drei globalen Transaktionssteuerungen in den drei Knoten befinden sich damit im Wartezustand, der ewig dauern kann, weil eine Systemverklemmung eingetreten ist, die äußerlich an der Verkettung der die einzelnen Subtransaktionen darstellenden Pfeile zu einer geschlossenen Schliefe entsprechend einem geschlossenen globalen Wartegraphen erkennbar ist. Um die Datenverarbeitung im System fortsetzen zu können, muß daher eine der Subtransaktionen und damit zwangsläufig die gesamte zugehörige globale Transaktion, zum Beispiel die Subtransaktion STA31 und damit die Globaltransaktion T3, zurückgesetzt werden, damit das System wieder arbeitsfähig wird.

Um verteilte Datenbanksysteme arbeitsfähig zu erhalten, muß also die Gefahr einer Systemverklemmung rechtzeitig erkannt werden. FIG 2 zeigt ein Ablaufdiagramm des dies sicherstellenden Verfahrens gemäß der Erfindung in Anwendung auf die der FIG 1 zugrundeliegende Auftragskonstellation.

Die Darstellung erfaßt wiederum die drei Knoten K1, K2 und K3 mit den in Bearbeitung befindlichen oder aktiven Subtransaktionen STA11 bzw. STA21 bzw. STA31. Zu einem beliebigen Zeitpunkt wird danach ein Auftrag für die Ausführung der Subtransaktion STA12 vom Knoten K1 an den Knoten K2 vergeben, die dasselbe Objekt wie die dortige Transkation STA21 benötigt. Die Subtransaktion STA12 läuft daher auf eine Sperre durch die Subtransaktion STA21. Da letztere noch nicht in die lokale Wartegraphentabelle eingetragen ist, wird der dargestellte neue Wartegraph WG21 in die Wartegraphentabelle eingetragen. Weiterhin wird eine Sperr-Rückmeldung SRM an den auftraggebenden Knoten K1 zurückgesandt, die einen Eintrag des neuen Wartegraphen WG11, bestehend aus der Subtransaktion STA11 mit Markierung als "ENTFERNT GESPERRT" und mit der Zielangabe K2 im Kreis für den sperrenden Knoten in die dortige Wartegraphentabelle veranlaßt. Die gleichen Vorgänge spielen sich nacheinander bei der Auftragsvergabe für die Subtransaktion STA22 durch den Knoten K2 an den Knoten K3 und bei der Auftragsvergabe für die Subtransaktion STA32 durch den Knoten K3 an den Knoten K1 ab, so daß letztlich die Wartegraphen WG12, WG22 und WG32 entstehen.

Beim Übergang vom Wartegraphen WG21 zum Wartegraphen WG22 im Knoten K2 aufgrund der Sperr-Rückmeldung SRM des Knoten K3 ist die eine Bedingung für die Einleitung einer Verklemmungsanalyse DLA erstmals erfüllt, da das Endeglied eines bereits bestehenden Wartegraphen WG21 als "ENTFERNT GESPERRT" markiert und damit eine globale Wartebeziehung hergestellt wird. Dies führt zu einem Auftrag zur Durchführung einer Verklemmungsanalyse an den durch die Zielangabe bezeichneten Knoten 3 mit der Identität der zum Endeglied STA21 gehörigen Globaltransaktion T2 als Suchkriterium für den zugehörigen Wartegraphen WG31 und der Identität derselben Globaltransaktio-T2 als Prüfkriterium.

Im Knoten K3 ergibt die Prüfung des Wartegraphen WG31, daß das Endeglied STA31 nicht zur Globaltransaktion T2 gehört und der aus den lokalen Wartegraphen WG22 und WG31 bestehende globale Wartegraph ein offenes Ende hat. Die Verklemmungsanalyse wird daher ohne weitere Auswirkung abgebrochen.

Weiterhin läuft die Subtransaktion STA32 im Knoten K1 direkt auf die als "ENTFERNT GESPERRT" markierte Subtransaktion STA11 als Sperre auf, so daß die andere Auslösebedingung für eine Verklemmungsanalyse DLA gegeben ist. Ziel für den Auftrag zur Verklemmungsanalyse ist in diesem Falle der Knoten K2 mit der von der Subtransaktion STA11 abgeleiteten Identität der Globaltransaktion T1 für das Aufsuchen des Wartegraphen WG22 im Knoten 2 und der von der Subtransaktion STA32 als auslösendem Ereignis abgeleiteten Identität der Globaltransaktion T3 als Prüfkriterium.

Die durch diesen Analyseauftrag ausgelöste Überprüfung des Wartegraphen WG22 im Knoten K2 führt zu einem weiteren Verklemmungsanalyseauftrag an den Knoten K3 mit der von der Subtransaktion STA21 als Endeglied abgeleiteten Identität der Globaltransaktion T2 als neuem Suchkriterium bei unverändertem Prüfkriterium. Die dadurch im Knoten K3 ausgelöste Prüfung des Wartegraphen WG32 führt schließlich auf das von der Subtransaktion STA31 gebildete Endeglied der gesuchten Globaltransaktion T3, wodurch der Nachweis für eine geschlossene Schleife im überprüften globalen Wartegraphen erbracht ist, so daß ein die Verklemmung aufhebender Rücksetzvorgang RESET eingeleitet wird.

Ähnlich wie beim Übergang vom Wartegraphen WG21 auf den Wartegraphen WG22 im Knoten K2 wird im Knoten K3 nach Eintreffen der Sperr-Rückmeldung SRM des Knotens K1 mit Übergang vom Wartegraphen WG31 auf den Wartegraphen WG32 im Knoten K3 die Auslösebedingung für eine Verklemmungsanalyse DLA erfüllt, die nacheinander die Knoten K1, K2 und K3 erfaßt und im Knoten K3 die Verklemmung feststellt. In diesem Falle sind statt zwei jedoch drei Aufträge für eine Verklemmungsanalyse zu übertragen, da Ausgangspunkt der Verklemmungsanalyse nicht das Einstiegglied eines Wartegraphen, wie zum Beispiel beim Wartegraphen WG12 im Knoten 1, sondern das endeglied eines Wartegraphen, wie z.B. beim Wartegraphen WG32, im Knoten K3 ist.

Unabhängig davon führt die vorgegebene Auftragskonstellation zum selben Ergebnis, nämlich zur Feststellung der Systemverklemmung im Knoten K3. Auch kommt es nur zur Rücksetzung einer Transaktion, wenn tatsächlich eine Verklemmung vorliegt. Der Nachrichtenumfang für die einzelnen Verklemmungsanalyseaufträge ist gering und erfordert neben den Angaben über die Art des Auftrages lediglich zwei Identitätsangaben von Transaktionen, von denen die eine als Suchkritierum und die andere als Prüfkriterium dient.

Durch Verzögerung der Aussendung von SperrRückmeldungen SRM um eine vorgegebene Zeitdauer unter der Voraussetzung, daß am Ende dieser Zeitdauer die Sperrbedingung noch gegeben ist, lassen sich unnötige Sperr-Rückmeldungen vermeiden, wenn das auslösende Sperrerignis nur von kurzer Dauer ist. Analoges gilt für vom selben Sperrerignis ausgelöste Verklemmungsanalyseaufträge, wenn diese nur nach Aussendung der Sperr-Rückmeldungen SRM an den Zielknoten gesendet werden.

Nicht vermeiden läßt sich ohne weiteres, daß Nachrichten für Verklemmungsanalyseaufträge unnötig übertragen werden, da eingeleitete Analysen ergebnislos abgebrochen oder durch ein Sperrereignis im System an zwei verschiedenen Knoten ausgelöst werden können. Im vorliegenden Falle zum Beispiel am Knoten K1 und nachfolgend aufgrund der Sperr-Rückmeldung SRM am Knoten K3, wenngleich beide Analysen zum selben Ergebnis führen.

Es sind aber auch Auftragskonstellationen möglich, bei denen zwei gleichzeitig an verschiedenen Knoten aufgrund wechselseitig gesperrter Subtransaktionen und sich kreuzender Sperr-Rückmeldungen eingeleitete Verklemmungsanalysen zur Feststellung einer Verklemmung in zwei verschiedenen Knoten führen. In diesem Falle werden dann zwar zwei Transaktionen zurückgesetzt, aber Anlaß ist immer eine tatsächlich bestehende Systemverklemmung.

Das Rücksetzen lediglich einer Transaktion im Falle einer Systemverklemmung und auch eine Verringerung unnötiger Nachrichten für Verklemmungsanalyseaufträge läßt sich durch Verwendung zusätzlicher Zeitmarken als Zeitstempel sicherstellen. Jede in die lokale Wartetabelle eingetragene Subtransaktion wird mit einer lokalen Zeitmarke versehen, deren Wert von einer lokalen Uhr je Knoten abgeleitet wird und den Zeitpunkt der Eintragung angibt. Außerdem erhält jedes Endeglied im Wartegraphen eine zweite Zeitmarke für die Eintragung von Zeitwerten, die als Zeitmarke von anderen Knoten zusammen mit einer Sperrmeldung oder einem Analyseauftrag geliefert werden.

FIG 3 zeigt ein dem Verfahrensablauf von FIG 2 entsprechendes Ablaufdiagramm bei Verwendung von Zeitmarken, wobei unterstellt ist, daß alle lokalen Uhren synchron laufen, so daß die Abweichung der Uhren an den Knoten K1 und K3 mit Bezug auf die Uhr am Knoten K2 entsprechend $\Delta t = 0$ Null ist.

Läuft die Transaktion T1 im Knoten K2 auf eine Sperre durch die Transaktion T2, dann erhält die zugehörige lokale Zeitmarke den augenblicklichen Wert 1000 der lokalen Uhr als Sperrzeit $t_{SP}$. Dieser Wert wird auch als jeweils größter Wert $t_{Lmax}$ der lokalen Zeitmarken des Wartegraphen in die lokale Zeitmarke der sperrenden Transaktion T2 eingetragen, was durch einen Pfeil angedeutet ist. Die externe Zeitmarke der Transaktion T2 als Endeglied bleibt dagegen vorerst frei.

Die Sperrzeitangabe $t_{SP(K2)}$ wird mit der Sperr-Rückmeldung SRM ausgesendet und mit der Sperrmeldung SM an die betroffenen Knoten weitergeleitet. Im Knoten K1 wird daher mit Eintragung der Transaktion T1 in die Wartegraphentabelle als "ENTFERNT GESPERRT" die mitgelieferte Sperrzeit in die externe Zeitmarke als Wert $t_{EX}$ eingetragen. Die lokale Zeitmarke bleibt in diesem Falle frei, da noch kein lokales Sperrereignis für diesen Wartegraphen vorliegt.

Analoges spielt sich ab, wenn anschließend die Transaktion T2 im Knoten K3 zum Zeitpunkt $t_{SP} = 1025$ auf die Sperre durch die Transaktion T3 läuft. Im Knoten K2 bewirkt die zugehörige Sperr-Rückmeldung SRM aufgrund der mitgelieferten Sperrzeitangabe $t_{SP(K3)}$ zweierlei:

1. Der augenblickliche höchste Wert $t_{Lmax}$ aller lokalen Zeitmarken wird in die externe Zeitmarke übernommen und eingefroren, was durch einen Pfeil angedeutet ist,
2. Im Rahmen der Prüfung, ob eine der beiden Auslösebedingungen für die Verklemmungsanalyse erfüllt ist, wird gleichzeitig geprüft, ob die Sperrzeitangabe $t_{sp(K3)}$ kleiner als der höchste Wert $t_{Lmax}$ der lokalen Zeitmarken ist.

Nur wenn die zuletzt genannte Bedingung zusätzlich erfüllt ist, wird eine Verklemmungsanalyse eingeleitet. Im vorliegenden Fall gilt dagegen $t_{Lmax} < t_{SP(K3)}$, so daß im Gegensatz zum Ablauf von FIG 2 keine Verklemmungsanalyse DLA eingeleitet wird.

Sobald nachfolgend die Transaktion T3 aus dem Knoten K3 im Knoten K1 unmittelbar auf die Sperre durch die als "ENTFERNT GESPERRT" markierte Transaktion T1 aufläuft - Sperrzeit $t_{SP} = 1500$ - , wird erstmalig eine lokale Zeitmarke angelegt und daher, wie durch Pfeile angezeigt, die Sperrzeit $t_{SP}$ in die externe Zeitmarke übernommen. Weitere in diesem Graphen auf Sperre laufenden Transaktionen ändern zwar die lokale Zeitmarke auf den neuen Wert $t_{Lmax}$ ab, nicht dagegen die bestehende externe Zeitmarke. Diese wird nachfolgend nur geändert, wenn die Markierung als "ENTFERNT GESPERRT" wieder aufgehoben ist und nachfolgend ein Verklemmungsanalyseauftrag oder eine erneute Sperrmeldung eingeht usw..

Außerdem wird im Rahmen der Prüfung, ob eine der beiden Auslösebedingungen für die Verklemmungsanalyse erfüllt ist, nun geprüft, ob die neue Sperrzeit $t_{SP}$ größer als der Wert der zum Sperrzeitpunkt gültigen externen Zeitmarke ist. In diesem Falle ist diese Bedingung gemäß $t_{SP}$ = 1050 > $t_{EXalt}$ = 1000 erfüllt, so daß eine Verklemmungsanalyse DLA eingeleitet wird, wobei für die Prüfzeit $t_{DLA}$ immer der letztendlich gültige Wert $t_{EX}$ der externen Zeitmarke, also der Wert 1050, verwendet wird.

Bei der Ausführung der Verklemmungsanalyse im angesteuerten Knoten, also im Knoten K2, wird dann jeweils zusätzlich geprüft, ob die Analyseprüfzeit $t_{DLA}$ größer oder mindestens gleich dem Wert $t_{EX}$ der vorhandenen externen Zeitmarke ist. Nur wenn dies der Fall ist, wird der Analyseauftrag mit der ursprünglichen Analyseprüfzeit $t_{DLA}$ zum nächsten Knoten weiltergereicht. Im vorliegenden Falle sind wegen 1050 ≧ 1000 im Knoten K2 alle Bedingungen erfüllt, und die daher auf den Knoten K3 übergreifende Verklemmungsanalyse kann dort die bestehende Systemverklemmung feststellen. Dagegen wird aufgrund der Sperr-Rückmeldung SRM an den Knoten K3 wegen der nicht erfüllten Zeitbedingung keine Verklemmungsanalyse eingeleitet.

Das Ablaufdiagramm von FIG 4 unterscheidet sich von dem von FIG 3 dadurch, daß gegenüber der Uhr am Knoten K2 die Uhr am Knoten K1 entsprechend Δt = + 100 vorläuft und die Uhr am Knoten K3 entsprechend Δt = - 100 nachläuft. Als Folge davon führt im Gegensatz zu FIG 3 die Sperr-Rückmeldung SRM vom Knoten K3 zum Knoten K2 im Knoten K2 zur Einleitung einer Verklemmungsanalyse, da $t_{Lmax}$ = 1000 > $t_{SP(K3)}$ = 925 ist. Die daraufhin im Knoten K3 durchgeführte Prüfung führt aber zum Abbruch der Analyse, da kein der Transaktion T2 zugehöriges Endeglied im Wartegraphen vorhanden ist. Jedoch wird die mitgelieferte Analyseprüfzeit $t_{DLA}$ = 1000 in die dortige externe Zeitmarke eingetragen.

Ansonsten haben die Zeitunterschiede keine weiteren Auswirkungen auf den übrigen Verfahrensablauf. Es wird lediglich beim Eintreffen der Sperr-Rückmeldung SRM vom Knoten K1 im Knoten K3 der vorhandene Wert der externen Zeitmarke durch den höchsten Wert der vorliegenden lokalen Zeitmarke ersetzt. Beim Ablaufdiagramm von FIG 5 sind im Vergleich zu dem von FIG 4 die Zeitverschiebungen umgekehrt gerichtet. Die Uhr im Knoten K1 läuft gegenüber der Uhr im Knoten K2 entsprechend
Δt = - 100 nach und die Uhr im Knoten K3 entsprechend
Δt = + 100 vor.

Auswirkungen ergeben sich daher im Vergleich zum Verfahrensablauf von FIG 3 erst nach Eintreffen des Auftrages für die Transaktion 3 im Knoten K1. Da die lokale Sperrzeit $t_{SP}$ = 950 kleiner ist als der Wert $t_{EXalt}$ = 1000 der vorhandenen externen Zeitmarke, wird im Knoten K1 keine Verklemmungsanalyse eingeleitet. Dies übernimmt der Knoten K3 nach Eintreffen der Sperr-Rückmeldung SRM aus dem Knoten K1, da $t_{Lmax}$ = 1125 > $t_{SP(K3)}$ = 950 ist. Der höchste Wert $t_{Lmax}$ = 1125 der lokalen Zeitmarken wird daher durch Übertragen in die externe Zeitmarke eingefroren und bildet die Analyseprüfzeit $t_{DLA}$. Die Such- und Prüfidentität entsprechen in diesem Fall beide der des Endegliedes, das der globalen Transaktion T3 angehört. Die Verklemmungsanalyse erfaßt nacheinander alle drei Knoten, da im Knoten K1 und K2 die aufgesuchten Wartegraphen zum jeweils nächsten Knoten überleiten und die Zeitbedingung $t_{DLA}$ ≧ $t_{EX}$ jedesmal erfüllt ist. Im Knoten K3 wird dann schließlich die Verklemmung festgestellt.

Im Vergleich zum Verfahrensablauf von FIG 2 wird bei Verwendung von Zeitmarken die Gefahr, daß von einem einzigen Sperrereignis zwei verklemmungsanalysen ausgelöst oder gar zwei Transaktionen zugesetzt werden, bis auf den Ausnahmefall, daß identische Zeitmarken auftreten, vollkommen unterdrückt. Dabei brauchen, wie gezeigt, die Uhren an den einzelnen Knoten im Gegensatz zu den bekannten Zeitstempelverfahren nicht synchronisiert zu sein.

FIG 6 zeigt den strukturellen Aufbau eines Knotens K... in Anlehnung an das Datenbanksystem SESAM-DCN der Siemens AG - Druckschrift U655-J1-Z55-2.

Anwenderprogramme ANW, die auf lokale Datenbanken oder Datenbanken in anderen Rechnern als Knoten zugreifen, laufen unter der Aufsicht einer globalen Transaktionssteuerung GTS ab, die die Verbindung zwischen den Anwenderprogrammen und den Datenbanksteuereinrichtungen DBMS der gewünschten Datenbank abhängig von den in einem Datenbankkatalog festgelegten Verteilungsregeln herstellt. Befindet sich die Datenbank im eigenen Knoten, erfolgt der Zugriff zu den Datenbanksteuereinrichtungen DBMS direkt. Befindet sich die Datenbank in einem fremden Knoten, dann erfolgt der Zugriff in Verbindung mit den Kontrolleinrichtungen für die verteilte Verarbeitung DCN. Letztere sind insbesondere für den Aufbau der Verteilungsregeln, für die Entgegennahme von Datenbankzugriffen aus anderen Knoten und deren Weiterleitung an die entsprechenden Datenbanksteuereinrichtungen DBMS, sowie für die Verwaltung und Überwachung des verteilten Datenbanksystems zuständig. Die Verbindung dieser Einrichtungen eines Knotens mit den Einrichtungen eines anderen Knotens werden dabei über Kommunikationseinrichtungen CAM mit den Verbindungsleitungen VL hergestellt. Weiterhin sind die Datenbanksteuereinrichtungen DBMS und die Kontrolleinrichtungen DCN in dedem Knoten K... durch Pufferspeicher TAB gekoppelt, über die Aufträge in der einen oder anderen Richtung weitergeleitet werden können, so daß Datenbankaufgaben und Administrationsaufgaben weitgehend unabhängig voneinander bearbeitet werden können. Zu diesen Pufferspeichern gehört vor allem auch die lokale Wartegraphentabelle, die von beiden Seiten angesteuert und gegebenenfalls geändert werden kann.

Die sich daraus bei einem verteilten Datenbanksystem mit drei Knoten ergebenden Verkehrsbeziehungen zwischen einer globalen Transaktionssteuerung GTS am Knoten K1 und den Datenbanken in den drei Knoten K1 bis K3 sind aus dem Blockschaltbild von FIG 7 zu ersehen. Die globale Transaktionsssteuerung GTS im Knoten K1 steht mit den Datenbanksteuereinrichtungen DBMS am eigenen Knoten direkt in Verbindung, um Datenzugriffe auszuführen und Ergebnisse der Datenbearbeitung entgegenzunehmen, wobei eine direkte Ansteuerung und Änderung der lokalen Wartegraphentabelle möglich ist. Datenzugriffe TA-AUF zu entfernten Datenbanksteuereinrichtungen DBMS2 und DBMS3 an den anderen Knoten K2 und K3 laufen dagegen über die örtlichen Kontrolleinrichtungen DCN2 und DCN3, während Ergebnisse TA-ERG von den Datenbanksteuereinrichtungen DBMS2 und DBMS3 jeweils direkt an die auftraggebende globale Transaktionssteuerung GTS zurückgesendet werden. Darüber hinaus notwendige Überwachungsmeldungen M werden direkt zwischen der jeweiligen globalen Transaktionssteuerung GTS und den angesprochenen Kontrolleinrichtungen DCN2 bzw. DCN3 ausgetauscht. Außerdem stehen alle Kontrolleinrichtungen DCN1 bis DCN3 für Administrationszwecke miteinander in Verbindung.

Bei verteilten Datenbanksystemen mit globalen Transaktionssteuerungen GTS an mehreren Knoten wären die entsprechenden Knoten in gleicher Weise wie der Knoten K1 in FIG 7 durch eine globale Transaktionssteuerung mit ihren Verkehrsbeziehungen zu ergänzen.

Die von einer globalen Transaktionssteuerung GTS durchzuführenden Transaktionen bestehen bekanntlich aus einer Folge von Anweisungen, die einem Ausführungsplan entnommen werden. Jede Transaktion wird mit einer Beginn-Anweisung BTA eröffnet, wobei entsprechend dem zugrundeliegenden Zwei-Phasen-Sperrprotokoll ein benötigtes Datenobjekt erst gesperrt und die Sperre bestätigt wird, bevor eine Transaktion auf das Objekt zugreifen kann, und alle von einer Transaktion benötigten Objekte erst wieder freigegeben werden, wenn die Transaktion beendet werden kann oder zurückgesetzt werden muß. Für das Beenden einer Transaktion mit der Ende-Anweisung ETA wird ein Zwei-Phasen-Endeprotokoll verwendet, wonach erst nach einer Phase 1, die das vorläufige Ende der Transaktion anzeigt, mit einer Phase 2 für das endgültige Ende die Datenbankänderungen fest geschrieben werden und das System in den nächsten konsistenten Zustand überführt wird. Kann dagegen eine Transaktion nicht zu Ende geführt werden, wird sie mit einer Rücksetz-Anweisung RTA zurückgesetzt.

Dies vorausgesetzt, sei zunächst anhand der Ablaufdiagramme von FIG 8A und FIG 8B die Arbeitsweise der globalen Transaktionssteuerung GTS in groben Zügen beschrieben, wobei sich FIG 8A auf die Abarbeitung der Anweisungen im vorliegenden Ausführungsplan bei der Ausführung von Transaktionen und FIG 8B auf die Reaktion entsprechend den eingehenden Rückmeldungen bezieht.

Mit dem Start der globalen Transaktionssteuerung GTS wird ein erster Auftrag aus dem Ausführungsplan entnommen. Ist das Ende der Aufträge für eine Transaktion noch nicht erreicht, wird anhand des Datenbankkataloges ermittelt, in welchem Zielknoten die benötigte Datenbank liegt, und anhand einer Subtransaktionsliste geprüft, ob für das Zielsystem schon eine Subtransaktion besteht. Liegt noch keine Subtransaktion vor, so wird diese in die Subtransaktionsliste eingetragen und eine BTA-Anweisung mit Auftrag an den Zielknoten übergeben. Im anderen Falle wird nur der neue Auftrag zur bestehenden Subtransaktion versendet.

Wenn schließlich das Ende einer Transaktion erreicht ist, werden ETA-Anweisungen an alle von einer Subtransaktion betroffenen Zielknoten gesandt und die laufende Transaktion beendet. Nach Absetzen jeweils eines der angesprochenen Aufträge wird die Arbeit der globalen Transaktionssteuerung GTS für die laufende Transaktion eingestellt. Die Transaktionssteuerung befindet sich im Wartezustand für Rückmeldungen, die den Fortgang der Arbeit bestimmen.

Empfänger aller Aufträge sind die jeweiligen Datenbanksteuereinrichtungen DBMS im jeweiligen Zielknoten, wobei gemäß FIG 7 die Ansteuerung der Datenbanksteuereinrichtung DBMS in fremden Knoten jeweils über die dortigen Kontrolleinrichtungen DCN erfolgt, während die Datenbanksteuereinrichtungen DBMS im eigenen Knoten direkt angesteuert und von den Kontrolleinrichtungen DCN in den fremden Knoten zum Teil auszuführende Aufgaben hier von der lokalen globalen Transaktionssteuerung GTS übernommen und ausgeführt werden.

FIG 8B zeigt den Fortgang des Arbeitsablaufes der globalen Transaktionssteuerung GTS nach Eintreffen zweier im Rahmen der vorliegenden Erfindung sich auswirkender Rückmeldungen. Melden die Kontrolleinrichtungen DCN eines fremden Knotens oder die lokalen Datenbanksteuereinrichtungen DBMS, daß ein Transaktionsauftrag auf Sperre gelaufen ist, dann wird in der bestehenden Subtransaktionsliste die zugehörige Subtransaktion als gesperrt markiert. Weiterhin wird geprüft, ob in der Subtransaktionsliste noch weitere Subtransaktionen derselben Globaltransaktion aufgeführt sind. Ist letzteres nicht der Fall, dann geht die globale Transaktionssteuerung wieder in den Wartezustand über. Sind dagegen in der Subtransaktionsliste noch weitere Subtransaktionen angegeben, dann werden an die Kontrolleinrichtungen DCN aller zugehörigen fremden Zielknoten Sperrmeldungen SM mit dem Auftrag gesendet, in der dortigen Wartegraphentabelle WTB die entsprechende Subtransaktion als "ENTFERNT GESPERRT" zu markieren, während zur entsprechenden Kennzeichnung einer am eigenen Knoten laufenden Subtransaktion die lokale Wartegraphentabelle WTB von der globalen Transaktionssteuerung GTS direkt angesprochen und die Markierung vorgenommen wird.

Aufgrund einer Sperr-Rückmeldung SRM gemäß FIG 2 an die globale Transaktionssteuerung GTS werden also alle betroffenen Zielknoten unter der Aufsicht der globalen Transaktionssteuerung von diesem Sperrereignis informiert, und zwar direkt und/oder mit gesonderten Sperrmeldungen SM, die von den zuständigen Kontrolleinrichtungen DCN ausgewertet werden.

Trifft im weiteren Verlauf eine Ausführungsbestätigung zu dem vorübergehend auf Sperre gelaufenen Transaktionsauftrag ein, dann wird im Falle eines vorliegenden Sperrvermerks in der Subtransaktiosliste dieser wieder gelöscht, ein neuer Transaktionsauftrag gestartet und damit in den Ablauf von FIG 8A übergeleitet.

Von der jeweils steuernden globalen Transaktionssteuerung GTS an die Datenbanksteuereinrichtungen DBMS als angesteuertes Datenbanksystem gelangende Datenbankaufträge haben den im Ablaufdiagramm von FIG 9 wiedergegebenen Arbeitsablauf zur Folge. Zunächst wird geprüft, ob ein Ende- oder Rücksetz-Auftrag ETA bzw. RTA vorliegt. In diesem Falle ist die anhängige Subtransaktion abzuschließen, indem der veränderte bzw. der unveränderte Zustand festgeschrieben und danach die gesperrten Datenobjekte wieder freigegeben werden. Liegen zu der abzuschließenden Transaktion Einträge in der Wartegraphentabelle WTB vor, dann werden diese gelöscht und der zugehörige Wartegraph fortgeschrieben. Danach wird die Ausführung des Auftrages gegenüber der auftraggebenden globalen Transaktionssteuerung GTS in bekannter Weise quittiert.

War eine anhängige Subtransaktion nicht zu beenden, sondern ist ein neuer Auftrag auszuführen, wird zunächst geprüft, ob das benötigte Datenobjekt überhaupt frei ist. Ist dieses frei, so wird es gesperrt. Gegebenenfalls ist die Wartegraphentabelle anzupassen und ein bestehender Eintrag in der Auftragstabelle LOCK-TAB zu löschen, wenn der Auftrag vorher auf Sperre gelauten war und das Objekt erst nachträglich wieder freigeworden ist. Anschließend wird der Auftrag vorbereitend ausgeführt und das Ergebnis mit Ausführungsbestätigung der auftraggebenden globalen Transaktionssteuerung GTS mitgeteilt.

Ist dagegen das gewünschte Objekt nicht frei, sondern von einer anderen Transaktion gesperrt, dann läuft der neue Auftrag auf eine Sperre durch diese andere Transaktion. Dieses Sperrereignis führt daher zu einem Eintrag in die Wartegraphentabelle WTB und damit zur Einordnung in einen lokalen Wartegraphen der Wartegraphentabelle. Gleichzeitig wird aufgrund des Sperrereignisses und damit in Auswirkung der Erfindung ein Auftrag für eine globale Transaktionssteuerung GTS in eine Auftragstabelle LOCK-TAB eingetragen. Im Anschluß daran ist in weiterer Auswirkung der Erfindung zu prüfen, ob eine Auslösebedingung für eine Verklemmungsanalyse DLA erfüllt ist. Dazu wird, wie bereits erläutert, das Endeglied des zugehörigen Wartegraphen der Wartegraphentabelle geprüft. Ist dieses Endeglied nicht als "ENTFERNT GESPERRT" markiert, dann besteht keine globale Wartebeziehung im System und es kann in einen Wartezustand übergegangen werden, bis das gewünschte Datenobjekt frei wird.

Ist dagegen das Endeglied als "ENTFERNT GESPERRT" markiert, so ist bei Verwendung von Zeitmarken entsprechend der einen Verfahrensvariante gemäß der Erfindung zu prüfen, ob auch die Zeitbedingung für die Auslösung einer Verklemmungsanalyse DLA erfüllt ist. Für den Fall, daß die jeweils zu erfüllenden Bedingungen vorliegen, wird ein entsprechender Analyseauftrag in eine Auftragstabelle DLA-TAB eingetragen.

Unabhängig vom Ausgang dieser zusätzlichen Prüfungen wird zum Schluß ebenfalls der vorangehend erwähnte Wartezustand eingenommen und das Freiwerden des gesperrten Objektes überwacht.

Im vorliegenden Falle ist unterstellt, daß die Prüfung auf Vorliegen einer Auslösebedingung für eine Verklemmungsanalyse DLA von den Datenbanksteuereinrichtungen DBMS selbst ausgeführt wird. Dies liegt nahe, da der zu prüfende Wartegraphen in der Wartegraphentabelle WTB wegen des vorzunehmenden Sperreintrages sowieso aufzusuchen ist. Diese Aufgabe kann aber in gleicher Weise wie die Sendung der Sperr-Rückmeldung SRM anhand der Auftragstabelle LOCK-TAB und der Verklemmungsanalyseaufträge anhand der Auftragstabelle DLA-TAB den örtlichen Kontrolleinrichtungen DCN übertragen werden, indem gleichzeitig mit dem Eintrag in die Auftragstabelle GTS-TAB in einer weiteren Auftragstabelle ein entsprechender Auftrag hinterlegt wird oder indem die Prüfung infolge eines direkten Aufrufes durch die Datenbanksteuereinrichtungen ausgelöst wird, so daß letztere auch von dieser Prüfung entlastet sind.

Den prinzipiellen Aufbau einer Wartegraphentabelle WTB zeigt FIG 15. Für jede in einen Wartegraphen einzutragende Transaktion ist eine Eintragszeile mit der zugehörigen Identität TA-ID vorgesehen. Mehrere Zeilen können über Folgeadressen F-AD in an sich bekannter Weise zu einem Wartegraphen gekettet sein. Zu jeder Zeile gehören weiterhin Anzeigefelder, nämlich

| | |
|---|---|
| ZUSTAND | zur Kennzeichnung des augenblicklichen Zustandes der Transaktion als AKTIV, GESPERRT oder ENTFERNT GESPERRT, |
| ZIEL | zur Kennzeichnung des Knoten der entfernten Sperrung, |
| $ZEIT_L$ | als lokale Zeitmarke zur Kennzeichnung der lokalen Sperrzeit und |
| $ZEIT_{EX}$ | als externe Zeitmarke. |

Beim vorliegenden Beispiel beziehen sich die Einträge auf einen Wartegraphen mit den Transaktionen T1, T3, und Tx, wobei die Transaktion T1 das Endeglied darstellt und als "ENTFERNT GESPERRT" im Knoten K2 markiert ist. Auf diese Transaktion T1 sind nachfolgend die Transaktionen T3 und Tx aufgelaufen und daher als "GESPERRT" markiert. Die lokalen Zeitmarken enthalten die jeweilige Zeit des Eintrags, wobei die Zeitmarke des Endegliedes jeweils den höchsten Wert aller lokalen Zeitmarken des Wartegraphen enthält. Die externe Zeitmarke übernimmt dagegen einen durch externe Ereignisse ausgelösten Zeitwert, was bereits anhand von FIG 3 bis FIG 5 beschrieben worden ist.

Die wesentlichen Aufgaben im Rahmen der der Erfindung zugrundeliegenden Verfahren werden mit wenigen Ausnahmen am Knoten der auftraggebenden globalen Transaktionssteuerung GTs von den einzelnen Kontrolleinrichtungen DCN ausgeführt. Es sind dies die Aussendung von Sperr-Rückmeldungen SRM von Fremdknoten an die jeweils steuernde globale Transaktionssteuerung GTS, die Markierung einer Transaktion als "ENTFERNT GESPERRT" aufgrund einer Sperrmeldung SM der steuernden globalen Transaktionssteuerung GTS in fremden Knoten mit Prüfung auf vorliegen einer Auslösebedingung für die Verklemmungsanalyse DLA, die Vergabe von Analyseaufträgen anhand der Auftragstabelle DLA-TAB, die Durchführung einer Verklemmungsanalyse DLA anhand eines empfangenen Analyseauftrages gegebenenfalls mit Weiterleitung des Auftrages beim weiterführunden globalen Wartergraphen oder mit Feststellung der zurückzusetzenden Transaktion im Falle einer festgestellten Verklemmung und die Übergabe eines entsprechenden Rücksetzauftrages an die jeweils zugehörigen lokalen Datenbanksteuereinrichtungen DBMS.

Die entsprechenden Arbeitsabläufe seien nachfolgend anhand der Ablaufdiagramme von FIG 10 bis FIG 14 näher erläutert, wobei unterstellt sei, daß diese Aufgaben in Verbindung mit den übrigen Aufgaben der Kontrolleinrichtungen DCN im Rahmen einer zyklisch arbeitenden übergeordneten Aufgabenverwaltung wiederkehrend angesprochen und jeweils vorliegende Aufträge ausgeführt werden.

Bezüglich des Sendens der Sperr-Rückmeldung SRM von fremden Knoten an die jeweilige auftraggebende globale Transaktionssteuerung GTS gemäß FIG 10 sei dabei unterstellt, daß während einer zwischen der globalen Transaktionssteuerung GTS und den jeweiligen Datenbanksteuereinrichtungen DBMS in einem fremden Knoten bestehenden Verbindung die zugehörigen Kontrolleinrichtungen DCN in periodischen Abständen eine Kontrollnachricht TACK an die globale Transaktionssteuerung GTS zurücksenden, um dieser anzuzeigen, daß die Verbindung besteht. In diesem Falle können die Kontrollnachrichten TACK gemäß einer Weiterbildung der Erfindung durch Zusatzangaben zur Sperr-Rückmeldung SRM ergänzt werden.

Nach Aufruf der Aufgabe "KONTROLLNACHRICHT TACK SENDEN" wird daher zunächst die Auftragstabelle LOCK-TAB auf das Vorliegen eines Auftrages für eine Sperr-Rückmeldung an die gerade zu benachrichtigende globale Transkationssteuerung GTS überprüft. Liegt kein Auftrag vor, wird die Kontrollnachricht TACK in der üblichen Form gesendet. Ist dagegen eine Sperr-Rückmeldung SRM zu übersenden, werden die zugehörigen Angaben für die Sperr-Rückmeldung der Auftragstabelle LOCK-TAB entnommen und eine Kontrollnachricht mit Sperrinformation aufgebaut und gesendet.

In Systemen, in denen Verbindungsleitungsausfälle ohne das wiederholte Senden von Kontrollnachrichten TACK überwacht werden, werden die Sperr-Rückmeldungen dagegen als selbständige Nachrichten übermittelt.

Die Entnahme des Auftrages aus der Auftragstabelle LOCK-TAB, was mit einer Löschung des Eintrages verbunden ist, erfolgt im vorliegenden Beispiel mit einer Verzögerung um die Zeitdauer $\Delta T$, also nur, wenn zum Zeitpunkt des Zugriffs der Wert der lokalen Uhr mindestens gleich der um den Wert $\Delta T$ erhöhten Sperrzeitangabe $t_{AP}$ für die Sperr-Rückmeldung SRM ist. Werden daher Einträge in der Auftragstabelle LOCK-TAB vor Ablauf der Wartezeit $\Delta T$ durch die Datenbanksteuereinrichtungen DBMS gemäß FIG 9 wieder gelöscht, weil die Sperre inzwischen entfallen ist, so unterbleiben unnötige Sperr-Rückmeldungen, die gegebenenfalls eine Übermittlung unnötiger Nachrichten zur Durchführung von Verklemmungsanalysen auslösen könnten.

Der prinzipielle Aufbau der Auftragstabelle LOCK-TAB ist in FIG 16 gezeigt. Ein Eintrag umfaßt dabei die Identität GTS-ID der anzusteuernden globalen Transaktionssteuerung GTS, die Identität TA-ID der betroffenen Transaktion, die Zielangabe $ORT_{SP}$ für den vorzunehmenden Sperrvermerk und die Sperrzeitmarke $ZEIT_{SP}$ mit der Sperrzeitangabe $t_{SP}$.

Der Arbeitsablauf von FiG 11 zeigt Reaktion der Kontrolleinrichtung DCN in einem fremden Knoten nach Eingang Sperrmeldung SM, die einen Auftrag zur Markierung einer Transaktion als "ENTFERNT GESPERRT" zur Folge hat. Aufgrund dieses Auftrages wird zunächst die Wartegraphentabelle WTB überprüft und festgestellt, ob die betroffene Transaktion bereits eingetragen ist. Ist dies nicht der Fall, wird ein entsprechender neuer Wartegraphen angelegt, bestehend aus der identität TA-ID der betroffenen Transaktion, der Zustandsangabe "ENTFERNT GESPERRT" und dem Ziel der Fernsperrung. Bei Verwendung von zusätzlichen Zeitmarken wird in der zugehörigen externen Zeitmarke $ZEIT_{EX}$ auch die mitgeteilte Sperrzeitangabe $t_{SP(K...)}$ eingetragen. - Man siehe Zeile 1 der Wartegraphentabelle WTB von FIG 15.

Ist die angesprochene Transaktion dagegen in der Wartegraphentabelle WTB bereits enthalten, dann erfolgt die Ergänzung des zugehörigen Wartegraphen in gleicher Weise. Andererseits ist eine der auslösenden Bedingungen für die Prüfung, ob eine Verklemmungsanalyse DLA einzuleiten ist, erfüllt. Bei Verwendung von Zeitmarken wird außerdem geprüft, ob die vorgegebenen Zeitbedingungen erfüllt sind. Ist letzteres der Fall, erfolgt ein Eintrag in die Auftragstabelle DLA-TAB für die Durchführung einer Verklemmungsanalyse.

Der prinzipielle Aufbau dieser Auftragstabelle DLA-TAB ist aus FIG 17 ersichtlich. Ein Eintrag umfaßt in diesem Falle die Identität DCN-ID der anzusteuernden Kontrolleinrichtungen, die Identität $TA\text{-}ID_{EIN}$ einer Transaktion als Suchkriterium für den betroffenen Wartegraphen, die Identität $TA\text{-}ID_{DLA}$ einer Transaktion als Prüfkriterium für die Prüfung auf das Vorliegen einer Verklemmung, sowie bei Verwendung von Zeit marken $ZEIT_{DLA}$ den Wert der Analyseprüfzeit $t_{DLA}$.

Wie bereits erwähnt, wird bei einer am Ort der globalen Transaktionssteuerung GTS vorzunehmenden Markierung einer lokalen Transaktion als ENTFERNT GESPERRT die anhand von FiG 11 beschriebene Aufgabe von der globalen Transaktionssteuerung selbst ausgeführt.

Die aufgrund eines Eintrags in die Auftragstabelle DLA-TAB einzuleitende Verklemmungsanalyse DLA wird dagegen allein von den Kontrolleinrichtungen DCN der betroffenen Knoten ohne Einbeziehung der steuernden globalen Transaktionssteuerung GTS abgewickelt. FIG 12 zeigt den Arbeitsablauf bezüglich der Erteilung eines Verklemmungsanalyseauftrages und FIG 13 den Arbeitsablauf bezüglich der Ausführung des Auftrages im empfangenen Knoten.

Sobald von der Aufgabenverwaltung in einer der Kontrolleinrichtungen DCN die Aufgabe "PRÜFE DLA-TABELLE" aufgerufen wird, wird geprüft, ob in dieser ein Eintrag vorhanden ist. Liegt ein Auftrag vor, werden die Angaben hierzu entnommen und die Nachricht für einen Verklemmungsanalyseauftrag aufgebaut. Danach wird beispielsweise die Verbindung zum gewünschten Zielknoten hergestellt und, sobald diese steht, der Auftrag gesendet. Kann eine Verbindung dagegen nicht hergestellt und der Auftrag daher nicht weitergeleitet werden, dann muß ein Verbindungsausfall angenommen werden. In diesem Falle wird der Sperrvermerk der zugehörigen Transaktion in der Wartergraphentabelle gelöscht und diese als "AKTIV" markiert. Die Transaktion unterliegt damit wieder der üblichen lokalen Zeitüberwachung zur Verhinderung von Dauersperren und kann nach Zeitablauf zurückgesetzt werden. Der Verbindungsausfall bleibt damit ohne Auswirkung. Analoges gilt für Systeme, bei denen Nachrichten unmittelbar ohne vorherige Kontrolle der tatsächlichen Verbindungsherstellung ausgesendet werden und der Empfang jeder Nachricht quittiert wird, sobald eine Quittung ausbleibt.

Der am Zielhoten eingehende "AUFTRAG ZUR DURCHFÜHRUNG EINER VERKLEMMUNGSANALYSE" wird dann in der durch FiG 13 dargestellten Weise abgewickelt. Es wird zunächst anhand des suchkriteriums der zugehörige Wartegraphen in der Wartregraphentabelle WTB aufgesucht und das Ende dieses Wartegraphens anhand des Prüfkriteriums überprüft. Gehört das Endeglied zu eine anderen globalen Transaktion, wird geprüft, ob eine Markierung als ENTFERNT GESPERRT" vorliegt. Ist dies nicht der Fall, kann die Analyse abgebrochen werden. Andernfalls ist der Auftrag an den neuen Zielknoten weiterzuleiten, indem ein Eintrag in der Auftragstabelle DLA-TAB vorgenommen wird.

Werden zusätzliche Zeitmarken verwendet, ist die Weiterleitung des Analyseauftrages zusätzlich von der Einhaltung der notwendigen Zeitbedingung abghängig.

Gehört dagegen das Endeglied des überprüften Wartegraphen zur gesuchten Globaltransaktion, dann liegt eine Systemverklemmung vor. Anhand des Wartegraphen wird daher eine geeignete Subtransaktion zum Zurücksetzen ermittelt und ein entsprechender Auftrag in die Auftragstabelle RES-TAB eingetragen.

Im Rahmen einer neuen Aufgabenzuweisung "PRÜFE RES-TAB" wird dann geprüft, ob ein Rücksetzauftrag vorliegt. Ist dies der Fall, werden die zugehörigen Daten entnommen und eine Rücksetznachricht für die zuständigen lokalen Datenbanksteuereinrichtungen DBMS aufgebaut und an diese übergeben. Diese veranlassen dann entsprechend FIG 9 die Rüchsetzung der im Auftrag benannten Subtransaktion und melden dies auf direktem Wege der zuständigen globalen Transaktionssteuerung, die dann anhand der Subtransaktionsliste die weiteren Rücksetzaufträge an die betroffenen Zielknoten sendet. Kann ein Rücksetzauftrag von den zuständigen Datenbanksteuereinrichtungen DBMS aus irgendwelchen Gründen nicht angenommen werden, dann wird in der Wartegraphentabelle WTB mit der Identität der zurückzusetzenden Transaktion der zugehörige Wartegraphen WG aufgesucht und der Sperrvermerk des zugehörigen Endegliedes gelöscht und dieses als "AKTIV" markiert, so daß auch in diesem Falle wieder in die lokale Zeitüberwachung übergeleitet wird.

Das anhand von FIG 2 bis FIG 5 erläuterte Verfahren ist somit voll in die Steuerung eines verteilten Datenbanksystems integriert, wobei die eigentliche Datenverarbeitung durch die einzelnen Datenbanksteuereinrichtungen DBMS des verteilten Systems nur unwesentlich belastet wird, da alle wesentlichen Verfahrensaufgaben von den Kontrolleinrichtungen DCN des Systems wahrgenommen werden. Die jeweils zuständige globale Transaktionssteuerung GTS hat dabei in erster Linie die Aufgabe, Sperr-Rückmeldungen entgegenzunehmen und davon abgeleitet Sperrmeldungen an die von Subtransaktionen derselben Globaltransaktion betroffenen Knoten weiterzuleiten. Zusätzliche Aufgaben, die sich aus einem Sperreignis ergeben, führt die globale Transkationssteuerung dann nur im Verkehr mit den lokalen Datenbanksteuereinrichtungen DBMS im eigenen Knoten aus. Im übrigen sind die Kontrollsteuereinrichtungen DCN an den einzelnen Knoten zuständig, insbesondere für die Weiterleitung von Analyseaufträgen und deren Durchführung.

## Ansprüche

1. Verfahren zum Vermeiden von globalen Systemverklemmungen bei der Verarbeitung von durch Anwenderprogramme ausgelösten globalen Transaktionen (z.B. T1 bis in verteilten Datenbanksystemen mit mehreren Knoten (z.B. Kl bis K3),
   - wobei die an einem Knoten (z.B. Kl) ablaufenden Anwenderprogramme jeweils mit einer zugeordneten globalen Transaktionssteuerung (GTS) zusammenarbeiten, die die Abwicklung der einzelnen Transaktionen steuert, und
   - wobei jeder Knoten (z.B. Kl) ausgerüstet ist
     - mit lokalen Datenbanken,
     - mit Datenbanksteuereinrichtungen (DBMS)
       - für die Vergabe von Sperren beim Zugriff auf lokale Datenobjekte der zugehörigen Datenbank,
       - für das Aufheben Sperren bei Beendigung einer Transaktion,
       - für das Prüfen und Verwalten von lokalen Wartebeziehungen durch in einer lokalen Wartegraphentabelle (WTB) gespeicherte Wartegraphen (WG...) für die am Knoten auszuführenden Transaktionen oder selbständiger Teile davon als Subtransaktionen (STA) und
       - für das Rücksetzen von Transaktionen,
     - mit Kontrolleinrichtungen (DCN) für die verteilte Verarbeitung der Transaktionen und für die Überwachung bestehender Verbindungen zu anderen Knoten (z.B. K2 oder K3) und
     - mit Einrichtungen (CAM) für den Nachrichtenaustausch zwischen den einzelnen Knoten (K1 bis K3), **dadurch gekennzeichnet,**
   - daß jeder von einer globalen Transaktionssteuerung (GTS) ausgesandte und auf eine Sperre aufgelaufene Subtransaktionsauftrag (z.B. STA12) eine Sperr-Rückmeldung (SRM) an die zugehörige globale Transaktionssteuerung (GTS) auslöst,
   - daß die globale Transaktionssteuerung (GTS) aufgrund einer solchen Sperr-Rückmeldung (SRM) für alle übrigen Subtransaktionen (z.B. STA11) derselben Transaktionen (z.B. T1) Sperrmeldungen (SM) mit einer den die Sperrung auslösenden Knoten (z.B. K2) kennzeichnenden Zielangabe an alle betroffenen Knoten versendet, durch die die jeweils dort anhängige Subtransaktion (z.B. STA11) mit einem den Zustand "ENTFERNT GESPERRT" anzeigenden Sperrvermerk und der zugehörigen Zielangabe (z.B. K2) versehen wird,
   - daß jede in einem der Knoten (z.B. K2) auf eine Sperre gelaufene Subtransaktion (z.B. STA12) sowie jede mit einem Sperrvermerk zu versehende noch nicht eingetragene Subtransaktion (z.B. STA11 im Knoten K1) in die lokale Wartegraphentabelle (WTB) des jeweiligen Knotens eingetragen wird, in die im Falle einer vorliegenden Sperrmeldung (SM) auch der Sperrvermerk und die zugehörige Zielangabe in Zuordnung zur jeweils zugehörigen Subtransaktion eingetragen wird,

- daß beim Eintrag eines Sperrvermerks zu einer, lokale Datenobjekte sperrenden und damit das Endeglied eines Wartegraphen (WG...) bildenden Subtransaktion oder beim Eintrag einer Subtransaktion (z.B. STA32) in einen Wartegraphen (WG12), dessen Endeglied (STA11) bereits durch einen Sperrvermerk als "ENTFERNT GESPERRT" markiert ist, eine Verklemmungsanalyse (DLA) eingeleitet wird, wobei die Verklemmungsanalyse schrittweise auf die Knoten (z.B. K2, K3), deren lokale Wartegraphen (WG22, WG32) durch ihre Zielangabe und die Transaktionsidentität (TI bzw. T2) des jeweiligen mit einen Sperrvermerk versehenen Endegliedes vorübergehend zu einem globalen Wartegraphen verbunden sind, ausgedehnt wird, bis ein offenes Ende des globalen Wartegraphen gefunden oder eine Verklemmung erkannt worden ist, die dann durch Rücksetzen einer geeigneten Transaktion aufgehoben wird.

2. Verfahren nach Anspruch 1, **dadurch gekennzeichnet,** daß zur Durchführung einer Verklemmungsanalyse (DLA) jeweils zwei Identitätsangaben (z.B. T1,T3) bereitgestellt werden, von denen die eine (z.B. T3) als einheitliches Prüfkriterium für die Feststellung einer Verklemmung in allen an der Prüfung beteiligten Knoten (z.B. K2 und K3) abhängig von dem jeweils die Verklemmungsanalyse (DLA) auslösenden Ereignis gleich der Identität (T3) der Globaltransaktion ist, deren Subtransaktion auf einen als "ENTFERNT GESPERRT" markierten Wartegraphen (WG) aufgelaufen ist oder deren Subtransaktion nachträglich in einem Wartegraphen (WG) als "ENTFERNT GESPERRT" zu markieren ist, während die andere (T1) als Suchkriterium zum Auffinden des zugehörigen Wartegraphen im jeweils angesteuerten Knoten (z.B. K2 oder K3) gleich der Identität (T1) der Globaltransaktion ist, deren Subtransaktion im jeweils auftraggebenden Knoten (z.B. K1) als "ENTFERNT GESPERRT" markiert ist, und daß eine Verklemmung als gegeben festgestellt wird, wenn in irgendeinem der von der Verklemmungsanalyse (DLA) erfaßten Knoten (z.B. K3) eine als "ENTFERNT GESPERRT" markierte Subtransaktion zu der durch das Prüfkriterium angegebenen Globaltransaktion (T3) gehört.

3. Verfahren nach Anspruch 1 oder 2, **dadurch gekennzeichnet,** daß bei einem auf Sperre gelaufenen Subtransaktionsauftrag die Aussendung der Sperr-Rückmeldung (SRM) um eine vorgegebene Zeitdauer verzögert wird, daß die Sperr-Rückmeldung (SRM) unterdrückt wird, wenn während dieser Zeitdauer die Sperrbedingung entfallen ist, und daß eine aufgrund der Sperrbedingung einzuleitende Verklemmungsanalyse (DLA) erst eingeleitet wird, wenn die Sperr-Rückmeldung gesendet ist.

4. Verfahren nach einem der Ansprüche 1 bis 3, **dadurch gekennzeichnet,**

- daß alle in eine Wartegraphentabelle (WTB) eingetragenen Transaktionen oder Subtransaktionen mit einer von einer lokalen Uhr abgeleiteten lokalen Zeitmarke ($ZEIT_L$) versehen werden,
- daß diese Zeitmarke als Sperrzeitangabe ($T_{SP(K...)}$) der Sperr-Rückmeldung (SRM) und den davon ausgelösten Sperrmeldungen (SM) zugesetzt wird,
- daß beim Eintreffen einer Sperrmeldung (SM) bei einem in der Wartegraphentabelle (WTB) noch nicht existierenden zugehörigen Wartegraphen ein neuer aus der entfert gesperrten Subtransaktion bestehender Wartegraph angelegt und mit einer externen Zeitmarke ($ZEIT_{EX}$) versehen wird, in die die mitgelieferte Sperrzeitangabe ($t_{SP(K...)}$) eingetragen wird, während bei einem bereits angelegten Wartegraphen der größte Werte ($t_{Lmax}$) der vorhandenen lokalen Zeitmarken ($ZEIT_L$) des Wartegraphen in die externe Zeitmarke ($ZEIT_{EX}$) übertragen wird,
- daß dagegen bei einer durch eine bereits als "ENTFERNT GESPERRT" markierte Subtransaktion erstmalig ausgelösten Sperre für eine weitere Subtransaktion der Wert der zugehörigen lokalen Zeitmarke als neuer Wert in die externe ($ZEIT_{EX}$) übernommen wird,
- daß eine Verklemmungsanalyse (DLA) nur ausgelöst wird, wenn bei einem durch eine bereits als "ENTFERNT GESPERRT" markierte Subtransaktion ausgelösten Sperrereignis der Wert ($t_{SP}$) der neuen lokalen Zeitmarke ($ZEIT_L$) größer als der Wert ($t_{EXalt}$) der zu erneuernden externen Zeitmarke ($ZEIT_{EX}$) ist oder wenn bei einem nachträglich als "ENTFERNT GESPERRT" zu markierenden Wartegraphen der größte Wert

($t_{Lmax}$) der vorhandenen lokalen Zeitmarken ($ZEIT_L$) des Wartegraphen größer als die mitgeteilte Sperrzeitangabe ($t_{SP(K...)}$) ist,
- daß bei Einleitung einer Verklemmungsanalyse (DLA) jeweils der zuletzt gültige Wert ($t_{EXneu}$) der externen Zeitmarke ($ZEIT_{EX}$) des den Analyseauftrag auslösenden Wartegraphen als Zeitmarke ($T_{DLA}$) beigefügt wird und
- daß die eingeleitete Verklemmungsanalyse (DLA) in den betroffenen Knoten (z.B. K2 oder K3) nur dann weitergeführt wird, wenn der Wert der mitgelieferten Zeitmarke ($T_{DLA}$) größer oder gleich dem Wert ($t_{EX}$) der im jeweiligen Knoten bestehenden externen Zeitmake ($ZEIT_{EX}$) ist.

5. Verfahren nach einem der Ansprüche 1 bis 4, **dadurch gekennzeichnet,** daß zur Aufhebung einer festgestellten Verklemmung jeweils die günstigste lokalgesperrte Subtransaktion in dem Knoten (z.B. K3) zurückgesetzt wird, in dem die Verklemmung erkannt worden ist.

6. Verfahren nach einem der Ansprüche 1 bis 5 für verteilte Datenbanksysteme mit Überwachung der bestehenden Verbindungen zwischen den einzelnen Knoten durch wiederholte Kontrollrückmeldungen (TACK) bzw. Quittungen, **dadurch gekennzeichnet,** daß Aufträge für Sperr-Rückmeldungen (SRM) von den lokalen Datenbanksteuereinrichtungen (DBMS) in eine Tabelle (LOCK-TAB) eingetragen werden, die von Zeit zu Zeit von den Kontrolleinrichtungen für die verteilte Verarbeitung (DCN) überprüft wird, wenn eine Kontrollnachricht (TACK) an eine globale Transaktionssteuerung (GTS) zu versenden ist, und daß bei Vorliegen eines gültigen Auftrages für eine Sperr-Rückmeldung (SRM) an diese globale Transaktionssteuerung (GTS) der Kontrollnachricht (TACK) die dem Auftrag entsprechende Sperrinformation zugesetzt wird.

7. Verfahren nach einem der Ansprüche 1 bis 6, **dadurch gekennzeichnet,** daß von einer globalen Transaktionssteuerung (GTS) ausgesandte Sperrmeldungen (SM) von den Kontrolleinrichtungen für die verteilte Verarbeitung (DCN) im empfangenden Zielknoten ausgewertet und die notwendigen Einträge in der lokalen Wartegraphentabelle (WTB) von diesen direkt vorgenommen werden.

8. Verfahren nach einem der Ansprüche 1 bis 7, **dadurch gekennzeichnet,** daß Aufträge für Verklemmungsanalysen (DLA) jeweils in eine Tabelle (DLA-TAB) eingetragen werden, die von Zeit zu Zeit von den Kontrolleinrichtungen für verteilte Verarbeitung (DCN) überprüft wird, daß bei Vorliegen eines Auftrages für einen anderen Knoten die Weiterleitung einer entsprechenden Nachricht eingeleitet wird, daß bei nicht übertragbarer Nachricht die Verklemmungsanalyse abgebrochen und im lokalen Wartegraphen die den Auftrag auslösende, als "ENTFERNT GESPERRT" markierte Subtransaktion direkt als "AKTIV" markiert wird, und daß von den Kontrolleinrichtungen für die verteilte Verarbeitung (DCN) im angesteuerten Knoten (z.B. K2) empfangene Aufträge zur Durchführung einer Verklemmungsanalyse (DLA) von diesen unmittelbar durch Prüfen der lokalen Wartegraphentabelle (WTB) ausgeführt werden, wobei im Falle einer festgestellten Verklemmung eine geeignete Transaktion ermittelt und ein daraus abgeleiteter Rücksetzauftrag in eine Tabelle (RES-TAB) eingetragen wird, von wo er an die zuständigen Datenbanksteuereinrichtungen (DBMS) weitergeleitet wird.

9. Verfahren nach Anspruch 8, **dadurch gekennzeichnet,** daß für den Fall, daß ein vorliegender Rücksetzauftrag von den zugehörigen Datenbanksteuerungen (DBMS) nicht angenommen wird, in der Wartegraphentabelle (WTB) der die zurückzusetzende Transaktion aufweisende Wartegraphen aufgesucht und das als "ENTFERNT GESPERRT" markierte zugehörige Endeglied als "AKTIV" markiert wird.

10. Anordnung zur Durchführung der Verfahren nach einem der Ansprüche 1 bis 9 seite 35a einfügen, **dadurch gekennzeichnet,** daß jede globale Transaktionssteuerung (GTS)
- Einrichtungen zur Entgegennahme von Sperr-Rückmeldungen (SRM) aus fremden Knoten (z.B. K2 und K3),
- Einrichtungen zur Überwachung von Sperrereignissen am eigenen Knoten (z.B. K1),
- Einrichtungen zur Ermittlung der übrigen Subtransaktionen der von einer Sperr-Rückmeldung (SRM) betroffenen globalen Transaktion,
- Einrichtungen zum Erzeugen und Absetzen entsprechender Sperrmeldungen (SM) an fremde Knoten (z.B. K2 und K3),
- Einrichtungen zum Prüfen und Ändern der Einträge der Wartegraphentabelle am eigenen Knoten (z.B. K1) abhängig von empfangenen Sperr-Rückmeldungen (SRM) oder abhängig von am eigenen Knoten (z.B. K1) aufgetretenen Sperr-Ereignissen und

- Einrichtungen zum Prüfen auf das Vorliegen eines damit verbundenen Auslösekriteriums für eine Verklemmungsanalyse anhand der lokalen Wartegraphentabelle (WTB) aufweist und daß jeder in Betracht kommende Knoten (z.B. K1 bis K3) unabhängig von einer gegebenenfalls am Knoten vorhandenen globalen Transaktionssteuerung (GTS)
- Einrichtungen zum Erzeugen und Senden von Sperr-Rückmeldungen (SRM) an die jeweils betroffene globale Transaktonssteuerung (GTS) abhängig von auf Sperre gelaufenen Subtransaktionen,
- Einrichtungen zur Entgegennahme von Sperrmeldungen (SM),
- Einrichtungen zum Prüfen und Ändern der Einträge der Wartegraphentabelle (WTB) abhängig von empfangenen Sperrmeldungen (SM) oder aufgetretenen Sperrereignissen und zum Prüfen auf das Vorliegen eines damit verbundenen Auslösekriteriums für eine Verklemmungsanalyse anhand der Wartegraphentabelle (WTB), Seite 35a einfügen und zum Vermeiden von globalen Systemverklemmungen bei der Verarbeitung von durch Anwenderprogramme ausgelösten globalen Transaktionen (z.B. T1 bis T3) in verteilten Datenbanksystemen mit mehreren Knoten (z.B. K1 bis K3),
- wobei die an einem Knoten (z.B. K1) ablaufenden Anwenderprogramme jeweils mit einer zugeordneten globalen Transaktionssteuerung (GTS) zusammenarbeiten, die die Abwicklung der einzelnen Transaktionen steuert, und
- wobei jeder Knoten (z.B. K1) ausgerüstet ist
  - mit lokalen Datenbanken,
  - mit Datenbanksteuereinrichtungen (DBMS)
    - für die Vergabe von Sperren beim Zugriff auf lokale Datenobjekte der zugehörigen Datenbank,
    - für das Aufhebens diesen Sperren bei Beendigung einer Transaktion,
    - für das Prüfen und Verwalten von lokalen Wartebeziehungen durch in einer lokalen Wartegraphentabelle (WTB) gespeicherte Wartegraphen (WG... ) für die am Knoten auszuführenden Transaktionen oder selbständiger Teile davon als Subtransaktionen (STA) und - für das Rücksetzen von Transaktionen,
  - mit Kontrolleinrichtungen (DCN) für die verteilte Verarbeitung der Transaktionen und für die Überwachung bestehender Verbindungen zu anderen Knoten (z.B. K2 oder K3) und
  - mit Einrichtungen (CAM) für den Nachrichteneustausch zwischen den einzelnen Knoten (K1 bis K3),
- Einrichtungen zum Erzeugen und Senden von Verklemmungsanalyseaufträgen sowie zum Empfangen von Verklemmungsanalyseaufträgen,
- Einrichtungen zum Prüfen auf Vorliegen einer Systemverklemmung abhängig von empfangenen Verklemmungsanalyseaufträgen anhand der Wartegraphentabelle (WTB) und
- Einrichtungen zum Erzeugen von Rücksetzaufträgen bei Feststellung einer Systemverklemmung aufweist. \

**11.** Anordnung nach Anspruch 10, **dadurch gekennzeichnet,** daß die in den Knoten (z.B. K1 bis K3) unabhängig von der gegebenenfalls vorhandenen globalen Transaktionssteuerung (GTS) vorgesehenen Einrichtungen den Kontrolleinrichtungen (DCN) für die verteilte Verarbeitung als Teileinrichtungen zugeordnet sind, daß sowohl die Datenbanksteuereinrichtungen (DBMS) als auch die entsprechenden Teileinrichtungen der Kontrolleinrichtungen (DCN) je Knoten (z.B. K1) mit der lokalen Wartegraphentabelle (WTB) gekoppelt sind und abhängig voneinander auf diese zugreifen können und daß zur Hinterlegung von Aufträgen für Sperr-Rückmeldungen (SRM), für die Durchführung von Verklemmungsanalysen (DLA) und für das Rücksetzen von Transaktionen (RESET) Pufferspeicher (LOCK-TAB, DLA-TAB, RES-TAB) vorgesehen sind.

**12.** Anordnung nach Anspruch 11, **dadurch gekennzeichnet,** daß die Pufferspeicher (DLA-TAB, RES-TAB) für Verklemmungsanalyse- und Rücksetzaufträge als FIFO-Speicher ausgebildet sind.

## Claims

**1.** Method for preventing global system deadlocks during the processing of global transactions (e.g. T1 to T3) initiated by application programs in distributed database systems having a plurality of nodes (e.g. K1 to K3),

- in which the application programs running at a node (e.g. K1) cooperate in each case with an assigned global transaction controller (GTS) which controls the execution of the individual transactions, and
- in which each node (e.g. K1) is equipped
  - with local databases,
  - with database control devices (DBMS)
    - for the allocation of locks during access to local data objects of the associated database,
    - for the cancellation of these locks upon completion of a transaction,
    - for the testing and management of local wait relationships by means of wait graphs (WG...) stored in a local wait graph table (WTB) for the transactions to be executed at the node or independent parts thereof as subtransactions (STA), and
    - for the resetting of transactions,
  - with control devices (DCN) for the distributed processing of the transactions and for the monitoring of existing connections to other nodes (e.g. K2 or K3), and
  - with devices (CAM) for exchanging messages between the individual nodes (K1 to K3), characterized
- in that each subtransaction job (e.g. STA12) which was sent by a global transaction controller (GTS) and encountered a lockout triggers a lockout acknowledgement (SRM) to the associated global transaction controller (GTS),
- in that, as a result of such a lockout acknowledgement (SRM), the global transaction controller (GTS) sends for all remaining subtransactions (e.g. STA11) of the same transactions (e.g. T1) lockout messages (SM) with a destination specification indicating the node (e.g. K2) triggering the lockout to all affected nodes, as a result of which the subtransaction (e.g. STA11) pending there in each case is provided with a lockout flag indicating the "REMOTELY LOCKED" status and the associated destination specification (e.g. K2),
- in that each subtransaction (e.g. STA12) which encountered a lockout in one of the nodes (e.g. K2) as well as each subtransaction (e.g. STA11 in node K1) which is to be provided with a lockout flag and has not yet been entered is entered in the local wait graph table (WTB) of the respective node, in which, in the case where a lockout message (SM) is present, the lockout flag and the associated destination specification are also entered in assignment to the respective associated subtransaction,
- and in that upon the entry of a lockout flag for a subtransaction that is locking local data objects and hence forms the end element of a wait graph (WG...), or upon the entry of a subtransaction (e.g. STA32) in a wait graph (WG12) whose end element (STA11) is already marked as "REMOTELY LOCKED" by a lockout flag, a deadlock analysis (DLA) is initiated, the deadlock analysis being extended step-by-step to the nodes (e.g. K2, K3) whose local wait graphs (WG22, WG32) are temporarily combined to form a global wait graph by means of their destination specification and the transaction identity (T1 or T2) of the respective end element provided with a lockout flag, until an open end of the global wait graph is found or a deadlock has been detected, which is then resolved by resetting a suitable transaction.

**2.** Method according to Claim 1, characterized in that, for performing a deadlock analysis (DLA), in each case two identifiers (e.g. T1, T3) are made available, one of which (e.g. T3), as uniform test criterion for the detection of a deadlock in all nodes (e.g. K2 and K3) participating in the check depending on the event triggering the deadlock analysis (DLA) in each case, is equal to the identity (T3) of the global transaction whose subtransaction has encountered a wait graph (WG) marked as "REMOTELY LOCKED", or whose subtransaction is to be marked subsequently in a wait graph (WG) as "REMOTELY LOCKED", while the other (T1), as search criterion for locating the associated wait graph in the respectively addressed node (e.g. K2 or K3), is equal to the identity (T1) of the global transaction whose subtransaction is marked as "REMOTELY LOCKED" in the respective job-issuing node (e.g. K1), and in that a deadlock is detected to be present when a subtransaction marked as "REMOTELY LOCKED" in any of the nodes (e.g. K3) covered by the deadlock analysis (DLA) belongs to the global transaction (T3) indicated by the test criterion.

**3.** Method according to Claim 1 or 2, characterized in that when a subtransaction job encounters a lockout, sending of the lockout acknowledgement (SRM) is delayed by a predetermined time period, in that the lockout acknowledgement (SRM) is suppressed if the lockout condition is dropped during this time period, and in that a deadlock analysis (DLA) to be initiated as a result of the lockout condition is only initiated once the lockout acknowledgement has been sent.

**4.** Method according to one of Claims 1 to 3, characterized

- in that all the transactions or subtransactions entered in a wait graph table (WTB) are provided with a local timing mark ($ZEIT_L$) derived from a local clock,
- in that this timing mark is added as lock time specification ($T_{SP(K...)}$) to the lockout acknowledgement (SRM) and the lockout messages (SM) triggered by the latter,
- in that upon the arrival of a lockout message (SM), in the case of an associated wait graph not yet existing in the wait graph table (WTB), a new wait graph consisting of the remotely locked subtransaction is created and is provided with an external timing mark ($ZEIT_{EX}$) in which the also supplied lock time specification ($t_{SP(K...)}$) is entered, while in the case of an already created wait graph, the greatest value ($t_{Lmax}$) of the existing local timing marks ($ZEIT_L$) of the wait graph is transferred into the external timing mark ($ZEIT_{EX}$),
- in that on the other hand in the case of a lockout triggered for the first time by a subtransaction already marked as "REMOTELY LOCKED", for a further subtransaction the value of the associated local timing mark is transferred as new value into the external timing mark ($ZEIT_{EX}$),
- in that a deadlock analysis (DLA) is only triggered if, in the case of a lockout event triggered by a subtransaction already marked as "REMOTELY LOCKED", the value ($t_{SP}$) of the new local timing mark ($ZEIT_L$) is greater than the value ($t_{EXalt}$) of the external timing mark ($ZEIT_{EX}$) to be renewed, or if, in the case of a wait graph to be marked subsequently as "REMOTELY LOCKED", the greatest value ($t_{Lmax}$) of the existing local timing marks ($ZEIT_L$) of the wait graph is greater than the notified lock time specification ($t_{SP(K...)}$),
- in that upon the initiation of a deadlock analysis (DLA) the last valid value ($t_{EXneu}$) of the external timing mark ($ZEIT_{EX}$) of the wait graph triggering the analysis job is added in each case as timing mark ($T_{DLA}$), and
- in that the initiated deadlock analysis (DLA) in the affected nodes (e.g. K2 or K3) is only continued if the value of the also supplied timing mark ($T_{DLA}$) is greater than or equal to the value ($t_{EX}$) of the external timing mark ($ZEIT_{EX}$) present in the respective node.

**5.** Method according to one of Claims 1 to 4, characterized in that for resolving a deadlock detected, in each case the most favourable locally locked subtransaction in the node (e.g. K3) in which the deadlock was detected is reset.

**6.** Method according to one of Claims 1 to 5 for distributed database systems with monitoring of the connections existing between the individual nodes by repeated control acknowledgements (TACK) or acknowledgements, characterized in that jobs for lockout acknowledgements (SRM) are entered by the local database control devices (DBMS) in a table (LOCK-TAB) which is checked from time to time by the control devices for the distributed processing (DCN) when a control message (TACK) is to be sent to a global transaction controller (GTS), and in that, if a valid job is present for a lockout acknowledgement (SRM) to said global transaction controller (GTS), the lockout information relevant to the job is added to the control message (TACK).

**7.** Method according to one of Claims 1 to 6, characterized in that lockout messages (SM) sent by a global transaction controller (GTS) are evaluated by the control devices for the distributed processing (DCN) in the receiving destination node, and the necessary entries are made directly in the local wait graph table (WTB) by said control devices.

**8.** Method according to one of Claims 1 to 7, characterized in that jobs for deadlock analyses (DLA) are entered in each case in a table (DLA-TAB) which is checked from time to time by the control devices for distributed processing (DCN), in that when a job for another node is present the forwarding of a corresponding message is initiated, in that when the message cannot be transmitted the deadlock analysis is aborted and the subtransaction triggering the job, marked as "REMOTELY LOCKED", in the local wait graph is marked directly as "ACTIVE", and in that jobs for performing a deadlock analysis (DLA) received in the addressed node (e.g. K2) from the control devices for the distributed processing (DCN) are immediately executed by the latter by checking of the local wait graph table (WTB), whereby, in the case of a deadlock detected, a suitable transaction is determined and a reset job derived therefrom is entered in a table (RES-TAB), from where it is forwarded to the responsible database control devices (DBMS).

**9.** Method according to Claim 8, characterized in that, in the case where an existing reset job is not accepted by the associated database controllers (DBMS), the wait graph having the transaction to be reset is searched for in the wait graph table (WTB), and the associated end element marked as "REMOTELY LOCKED" is marked as "ACTIVE".

**10.** Apparatus for carrying out the methods according to one of Claims 1 to 9 and for preventing global system deadlocks during the processing of global transactions (e.g. T1 to T3) initiated by application programs in distributed database systems having a plurality of nodes (e.g. KI to K3),
- in which the application programs running at a node (e.g. K1) cooperate in each case with an assigned global transaction controller (GTS) which controls the execution of the individual transactions, and
- in which each node (e.g. K1) is equipped
  - with local databases,
  - with database control devices (DBMS)
    - for the allocation of locks during access to local data objects of the associated database,
    - for the cancellation of these locks upon completion of a transaction,
    - for the testing and management of local wait relationships by means of wait graphs (WG...) stored in a local wait graph table (WTB) for the transactions to be executed at the node or independent parts thereof as subtransactions (STA), and
    - for the resetting of transactions,
  - with control devices (DCN) for the distributed processing of the transactions and for the monitoring of existing connections to other nodes (e.g. K2 or K3), and
  - with devices (CAM) for exchanging messages between the individual nodes (K1 to K3), characterized in that each global transaction controller (GTS) has
- devices for receiving lockout acknowledgements (SRM) from alien nodes (e.g. K2 and K3),
- devices for monitoring lockout events at its own node (e.g. K1),
- devices for determining the remaining subtransactions of the global transaction affected by a lockout acknowledgement (SRM),
- devices for generating and issuing corresponding lockout messages (SAM) to alien nodes (e.g. R2 and R3),
- devices for checking and changing the entries of the wait graph table at its own node (e.g. K1) depending on lockout acknowledgements (SRM) received or depending on lockout events which have occurred at its own node (e.g. K1), and
- devices for checking for the presence of a trigger criterion related thereto for a deadlock analysis on the basis of the local wait graph table (WTB), and in that each node in question (e.g. KI to K3) has, irrespective of any global transaction controller (GTS) present at the node,
- devices for generating and sending lockout acknowledgements (SRM) to the respective global transaction controller (GTS) affected depending on subtransactions encountering lockout,
- devices for receiving lockout messages (SM),
- devices for checking and changing the entries of the wait graph table (WTB) depending on lockout messages (SM) received or lockout events which have occurred and for checking for the presence of a trigger criterion related thereto for a deadlock analysis on the basis of the wait graph table (WTB),
- devices for generating and sending deadlock analysis jobs, as well as for receiving deadlock analysis jobs,
- devices for checking for the presence of a system deadlock depending on received deadlock analysis jobs on the basis of the wait graph table (WTB), and
- devices for generating reset jobs upon detection of a system deadlock.

**11.** Apparatus according to Claim 10, characterized in that the devices provided in the nodes (e.g. K1 to K3) irrespective of any global transaction controller (GTS) present are assigned as sub-devices to the control devices (DCN) for the distributed processing, in that both the database control devices (DBMS) and the corresponding sub-devices of the control devices (DCN) are coupled per node (e.g. K1) with the local wait graph table (WTB) and can access the latter independently of one another, and in that buffer memories (LOCK-TAB, DLA-TAB, RES-TAB) are provided for storing jobs for lockout acknowledgements (SRM), for the performance of deadlock analyses (DLA) and for the resetting of transactions (RESET).

**12.** Apparatus according to Claim 11, characterized in that the buffer memories (DLA-TAB, RES-TAB) for deadlock analysis and reset jobs are designed as FIFO memories.

## Revendications

**1.** Procédé pour éviter des blocages globaux lors du traitement de transactions globales (par exemple T1 à T3), déclenchées par des programmes d'utilisateurs, dans des systèmes distribués de base de données comportant plusieurs noeuds (par exemple K1 à K3),

- les programmes d'utilisateurs, qui se déroulent au niveau d'un noeuds (par exemple K1), coopérant respectivement avec un dispositif associé (GTS) de commande globale des transactions, qui commande le déroulement des différentes transactions, et
- chaque noeud (par exemple K1) comportant
  - des bases locales de données,
  - des dispositifs (DBMS) de commande des bases de données
    - pour l'application de blocages lors de l'accès à des objets locaux de données de la base de données associée,
    - pour la suppression de ces blocages à la fin d'une transaction,
    - pour le contrôle et la gestion de relations locales d'attente à l'aide de graphes d'attente (WG...), mémorisés dans un tableau local de graphes d'attente (WTB), pour les transactions devant être exécutées au niveau du noeud ou des parties indépendantes de telles transactions en tant que transactions partielles (STA), et
    - pour la suppression de transactions,
  - des dispositifs de contrQle (DCN) pour le traitement distribué des transactions et pour le contrôle de liaisons existantes avec d'autres noeuds (par exemple K2 ou K3), et
  - des dispositifs (CAM) pour l'échange d'informations entre les différents noeuds (K1 à K3), caractérisé par le fait
- que chaque ordre de transaction partielle (par exemple STA12), émis par un dispositif (GTS) de commande globale des transactions et bloqué, déclenche une signalisation en retour de blocage (SRM) au dispositif associé (GTS) de commande globale des transactions,
- que, sur la base d'une telle signalisation en retour de blocage (SRM) pour toutes les autres transactions partielles (par exemple STA11) des mêmes transactions (par exemple T1), le dispositif (GTS) de commande globale des transactions envoie à tous les noeuds concernés une indication de destination caractérisant le noeud (par exemple K2) déclenchant le blocage et au moyen de laquelle la transaction partielle (par exemple STA11), qui apparaît en cet endroit, est pourvue d'une marque de blocage indiquant l'état "BLOCAGE A DISTANCE" et l'indication associée de destination (par exemple K ),
- que chaque transaction partielle (par exemple STA12), qui est parvenue à un blocage dans l'un des noeuds (par exemple K2) ainsi que chaque transaction partielle (par exemple STA11 dans le noeud K1) non encore arrivée et devant être pourvue d'une marque de blocage, est introduite dans le tableau local de graphes (WTB) du noeud respectif, dans lequel sont également introduites, dans le cas d'une signalisation de blocage (SM) présente, également la marque de blocage et l'indication associée de destination, en association avec la transaction partielle respectivement associée,
- que, lors de l'introduction d'une marque de blocage concernant une transaction partielle bloquant des objets locaux de données et constituant par conséquent l'élément final d'un graphe d'attente (WG...), ou lors de l'introduction d'une transaction, partielle (par exemple STA32) dans un graphe d'attente (WG12), dont l'élément final (STA11) est déjà marqué par une marque de blocage en tant que "BLOQUÉ A DISTANCE", une analyse de blocage (DLA) est déclenchée, cette analyse de blocage étant étendue pas-à-pas aux noeuds (par exemple K2,K3), dont les graphes locaux d'attente (WG22, WG32) sont reliés au moyen de l'indication de destination et de l'identité (T1 ou T2) de la transaction de l'élément final respectif pourvu d'une marque de blocage, sont reliés de façon transitoire à un graphe global d'attente, jusqu'à ce qu'une extrémité ouverte du graphe global d'attente ait été trouvée ou qu'un blocage ait été identifié, qui est alors supprimé par la suppression d'une transaction appropriée.

**2.** Procédé suivant la revendication 1, caractérisé par le fait que pour l'exécution d'une analyse de blocage (DLA), on prépare respectivement deux indications d'identité (par exemple T1,T3), dont l'une (par exemple T3), qui constitue un critère uniforme de contrôle pour la détermination d'un blocage en tous les noeuds (par exemple K2 et K3) participant au contrôle, est égale, en fonction du signal déclenchant respectivement l'analyse de blocage (DLA), à l'identité (T3) de la transaction globale, dont la transaction partielle a atteint un graphe d'attente (WG) marqué "BLOQUÉ A DISTANCE" ou dont la transaction partielle doit être marquée ultérieurement comme "BLOQUÉE A DISTANCE" dans un graphe d'attente (WG), tandis que l'autre indication d'identité (T1) constituant un critère de recherche pour la détection du graphe d'attente associé dans le noeud (par exemple K2 ou K3) respectivement commandé, est égale à l'identité (T1) de la transaction globale, dont la transaction auxiliaire est marquée comme "BLOQUÉE A DISTANCE" dans le noeud (par exemple K1) délivrant respectivement l'ordre, et qu'un blocage est déterminé comme étant appliqué lorsque dans l'un quelconque des noeuds (par exemple K3) détecté par l'analyse de blocage (DLA), une transaction auxiliaire marquée comme étant "BLOQUÉE A DISTANCE" appartient à la transaction globale (T3) indiquée par le critère de contrôle.

**3.** Procédé suivant la revendication 1 ou 2, caractérisé par le fait que, dans le cas d'un ordre de transaction partielle, aboutissant au blocage, l'émission de la signalisation en retour de blocage (SRM) est retardée d'une durée prédéterminée, que la signalisation en retour de blocage (SRM) est supprimée lorsque la condition de blocage est supprimée pendant cette durée, et qu'une analyse de blocage (DLA), qui doit être déclenchée sur la base de la condition de blocage, n'est déclenchée que lorsque la signalisation en retour de blocage est émise.

**4.** Procédé suivant l'une des revendications 1 à 3, caractérisé par le fait

- que toutes les transactions ou transactions partielles, introduites dans un tableau de graphes d'attente (WTB) sont pourvues d'une marque temporelle locale ($TEMPS_L$), dérivée d'une horloge locale,
- que cette marque temporelle est ajoutée en tant qu'indication de temps de blocage ($T_{SP(K...)}$) à la signalisation en retour de blocage (SRM) et aux signalisations de blocage (SM) déclenchées par cette signalisation,
- que, lors de l'arrivée d'une signalisation de blocage (SM) dans un graphe d'attente associé, qui n'existe pas encore dans le tableau de graphes d'attente (WTB), un nouveau graphe d'attente constitué par la transaction auxiliaire bloquée à distance est appliqué et est pourvu d'une marque temporelle externe ($TEMPS_{EX}$), dans laquelle est insérée l'indication de temps de blocage ($t_{SP(K...)}$), délivrée conjointement, tandis que dans le cas du graphe d'attente déjà appliqué, la valeur maximale ($t_{Lmax}$) des marques de temps locales présentes ($TEMPS_L$) du graphe d'attente est transférée dans la marque temporelle externe ($TEMPS_{EX}$),
- que dans le cas d'un blocage déclenché pour la première fois par une transaction partielle marquée déjà comme étant "BLOQUÉE A DISTANCE", pour une autre transaction partielle la valeur de la marque temporelle locale associée est au contraire transférée en tant que nouvelle valeur dans la marque temporelle externe ($TEMPS_{EX}$),
- qu'une analyse de blocage (DLA) n'est déclenchée que lorsque, dans le cas d'un résultat de blocage déclenché par une transaction partielle déjà marquée comme "BLOQUÉE A DISTANCE", la valeur ($T_{SP}$) de la nouvelle marque temporelle locale ($TEMPS_L$) est supérieure à la valeur ($t_{EXancienne}$) de la marque temporelle externe ($TEMPS_{EX}$) devant être changée, ou que, dans le cas d'un graphe d'attente devant être marqué ultérieurement comme étant "BLOQUÉ A DISTANCE", la valeur maximale ($t_{Lmax}$) des marques temporelles locales ($TEMPS_L$) du graphe d'attente est supérieure à l'indication de temps de blocage ($t_{SP(K...)}$), communiquée conjointement,
- que lors du déclenchement d'une analyse de blocage (DLA), respectivement la valeur ($t_{EXnouvelle}$), valable en dernier, de la marque temporelle externe ($TEMPS_{EX}$) du graphe d'attente déclenchant l'ordre d'analyse est adjointe en tant que marque temporelle ($T_{DLA}$), et

- que l'analyse de blocage déclenchée (DLA) n'est retransmise, dans les noeuds concernés (par exemple K2 ou K3), que lorsque la valeur de la marque temporelle ($T_{DLA}$) délivrée conjointement est supérieure ou égale à la valeur ($t_{EX}$) de la marque temporelle externe ($TEMPS_{EX}$) existant dans le noeud respectif.

**5.** Procédé suivant l'une des revendications 1 à 4, caractérisé par le fait que pour supprimer un blocage établi, la transaction partielle la plus appropriée, bloquée localement, est respectivement supprimée dans le noeud (par exemple K3), dans lequel le blocage a été identifié.

**6.** Procédé suivant l'une des revendications 1 à 5 pour des systèmes distribués de base de données avec contrôle des liaisons existantes entre les différents noeuds au moyen de signalisations en retour de contrôle (TACK) répétées ou d'accusés de réception répétés, caractérisé par le fait que des ordres pour des signalisations en retour de blocage (SRM) sont introduits par les dispositifs locaux (DBMS) de commande de bases de données dans un tableau (LOCK-TAB), qui est contrôlé de temps à autres par les dispositifs de contrôle du traitement distribué (DCN), lorsqu'une information de contrôle (TACK) doit être envoyée à un dispositif global (GTS) de commande de transactions, et que dans le cas de la présence d'un ordre valable pour une signalisation en retour de blocage (SRM), l'information de blocage correspondant à l'ordre est ajoutée à l'information de contrôle (TACK), dans ce dispositif (GTS) de commande globale des transactions.

**7.** Procédé suivant l'une des revendications 1 à 6, caractérisé par le fait que des signalisations de blocage (SM) émises par le dispositif (GTS) de commande globale des transactions sont évaluées par les dispositifs de contrôle du traitement distribué (DCN) dans le noeud de destination réalisant la réception et que les entrées nécessaires dans le tableau local de graphes d'attente (WTB) sont exécutées directement par ces dispositifs.

**8.** Procédé suivant l'une des revendications 1 à 7, caractérisé par le fait que des ordres pour des analyses de blocage (DLA) sont introduits respectivement dans un tableau (DLA-TAB), qui est contrôlé de temps à autres par les dispositifs de contrôle du traitement distribué (DCN), que dans le cas de la présence d'un ordre pour un autre noeud, la retransmission d'une information correspondante est déclenchée, que dans le cas d'une information non transmissible, l'analyse de blocage est interrompue et la transaction partielle déclenchant l'ordre et marquée comme "BLOQUÉE A DISTANCE" est marquée directement comme étant "ACTIVE" dans le graphe local d'attente, et que des ordres reçus par les dispositifs de commande du traitement distribué (DCN) dans le noeud commandé (par exemple K2) pour l'exécution d'une analyse de blocage (DLA) sont exécutés directement par ces dispositifs, au moyen du contrôle du tableau du graphe local d'attente (WTB), et dans le cas où un blocage est établi, une transaction appropriée est déterminée et un ordre de suppression, qui en est dérivé, est introduit dans un tableau (RES-TAS), d'où cet ordre est retransmis aux dispositifs concernés (DBMS) de commande de base de données.

**9.** Procédé suivant la revendication 8, caractérisé par le fait que dans le cas où un ordre présent de suppression n'est pas reçu par les dispositifs associés (DBMS) de commande des bases de données, une recherche est effectuée dans le tableau (WTB) des graphes d'attente comportant la transaction devant être supprimée et que l'élément final associé, marqué comme étant "BLOQUÉ A DISTANCE" est marqué comme étant "ACTIF".

**10.** Dispositif pour la mise en oeuvre du procédé suivant l'une des revendications 1 à 9 et pour éviter des blocages globaux, lors du traitement de transactions globales (par exemple T1 à T3), déclenchées par des programmes d'utilisateurs, dans des systèmes distribués de base de données comportant plusieurs noeuds (par exemple K1 à K3),

- les programmes d'utilisateurs, qui se déroulent au niveau d'un noeud (par exemple K1), coopérant respectivement avec un dispositif associé (GTS) de commande globale des transactions, qui commande le déroulement des différentes transactions, et
- chaque noeud (par exemple K1) comportant
  - des bases locales de données,
  - des dispositifs (DBMS) de commande des bases de données
    - pour l'application de blocages lors de l'accès à des objets locaux de données de la base de données associée,
    - pour la suppression de ces blocages à la fin d'une transaction,

- pour le contrôle et la gestion de relations locales d'attente à l'aide de graphes d'attente (WG...), mémorisés dans un tableau local de graphes d'attente (WTB), pour les transactions devant être exécutées au niveau du noeud ou des parties indépendantes de telles transactions en tant que transactions partielles (STA), et
- pour la suppression de transactions,

- des dispositifs de contrôle (DCN) pour le traitement distribué des transactions et pour le contrôle de liaisons existantes avec d'autres noeuds (par exemple K2 ou K3), et
- des dispositifs (CAM) pour l'échange d'informations entre les différents noeuds (K1 à K3), caractérisé par le fait que chaque dispositif (GTS) de commande globale de transactions comprend :

- des dispositifs servant à recevoir des signalisations en retour de blocage (SRM) en provenance de noeuds étrangers (par exemple K2 et K3),
- des dispositifs pour contrôler des évènements de blocage dans le noeud proprement dit (par exemple K1),
- des dispositifs pour déterminer les autres transactions partielles de la transaction globale concernée par une signalisation en retour de blocage (SRM),
- des dispositifs pour produire et interrompre des signalisations correspondantes de blocage (SM) au niveau de noeuds étrangers (par exemple K2 et K3),
- des dispositifs pour contrôler et modifier les entrées dans le tableau des graphes d'attente dans le noeud proprement dit (par exemple K1) en fonction des signalisations en retour de blocage (SRM) reçues ou en fonction d'évènements de blocage apparus dans le noeud proprement dit (par exemple K1), et
- des dispositifs pour contrôler la présence d'un critère de déclenchement, qui y est lié, pour une analyse de blocage sur la base du tableau local des graphes d'attente (WTB),
- et que chaque noeud considéré (par exemple K1 à K3) comporte, indépendamment d'un dispositif (GTS) de commande globale des transactions, éventuellement présent dans le noeud,
- des dispositifs pour produire et envoyer des signalisations en retour de blocage (SRM) au dispositif respectivement considéré (GTS) de commande globale des transactions, en fonction de transactions partielles soumises à un blocage,
- des dispositifs pour recevoir des signalisations de blocage (SM),
- des dispositifs pour contrôler et modifier les entrées dans le tableau de graphes d'attente (WTB) en fonction de signalisations de blocage reçues (SM) ou d'évènements de blocage, qui sont apparus, et contrôler la présence d'un critère de déclenchement, qui y est lié, pour une analyse de blocage sur la base du tableau de graphes d'attente (WTB),
- des dispositifs pour produire et envoyer des ordres d'analyse de blocage ainsi que pour recevoir des ordres d'analyse de blocage,
- des dispositifs pour contrôler la présence d'un blocage du système en fonction d'ordres d'analyse de blocage reçus, sur la base du tableau de graphes d'attente (WTB), et
- des dispositifs pour produire des ordres de suppression lors de la détermination d'un blocage du système.

**11.** Dispositif suivant la revendication 10, caractérisé par le fait que les dispositifs prévus dans les noeuds (par exemple K1 à K3) indépendamment du dispositif éventuellement présent (GTS) de commande globale des transactions, sont associés aux dispositifs (DCN) de contrôle du traitement distribué en tant que dispositifs partiels, qu'aussi bien les dispositifs (DBMS) de commande des bases de données que les dispositifs partiels correspondants des dispositifs de contrôle (DCN) sont accouplés, pour chaque noeud (par exemple K1), au tableau local de graphes d'attente (WTB) et peuvent accéder à ce tableau indépendamment les uns des autres et qu'il est prévu des mémoires tampons (LOCK-TAB, DLA-TAB, RESTAB) servant à mémoriser les ordres pour des signalisations en retour de blocage (SRM), pour l'exécution d'analyses de blocage (DLA) et pour la suppression de transactions (RESET).

**12.** Dispositif suivant la revendication 11, caractérisé par le fait que les mémoires tampons (DLA-TAB, RESTAB) pour des ordres d'analyses de blocage et de suppression sont réalisée sous la forme de mémoires FIFO.

FIG 1

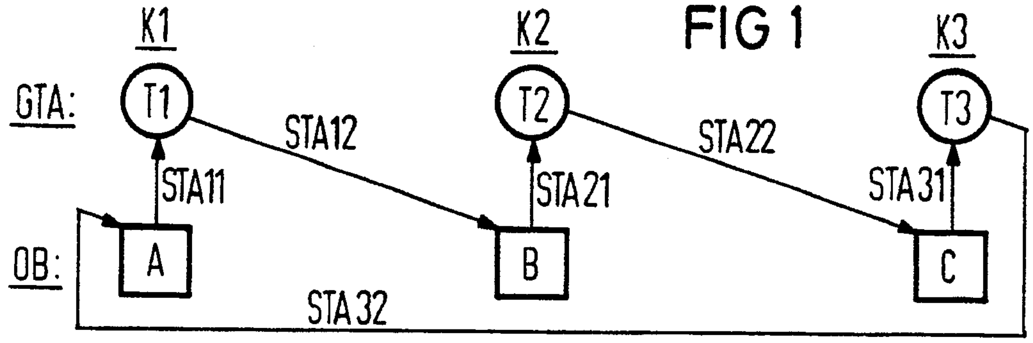


FIG 6

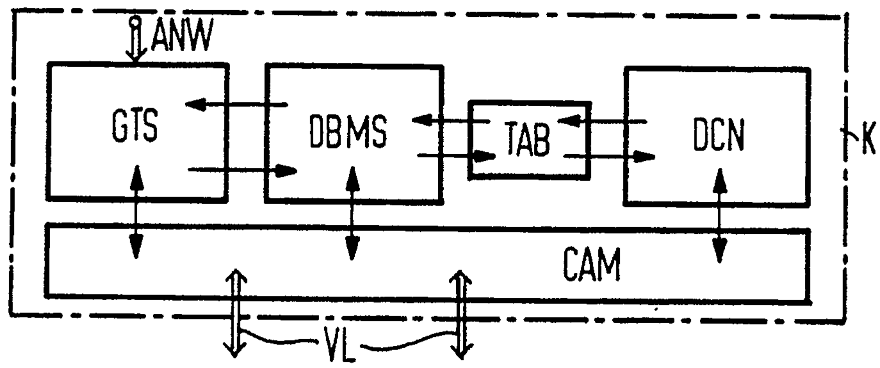


FIG 7

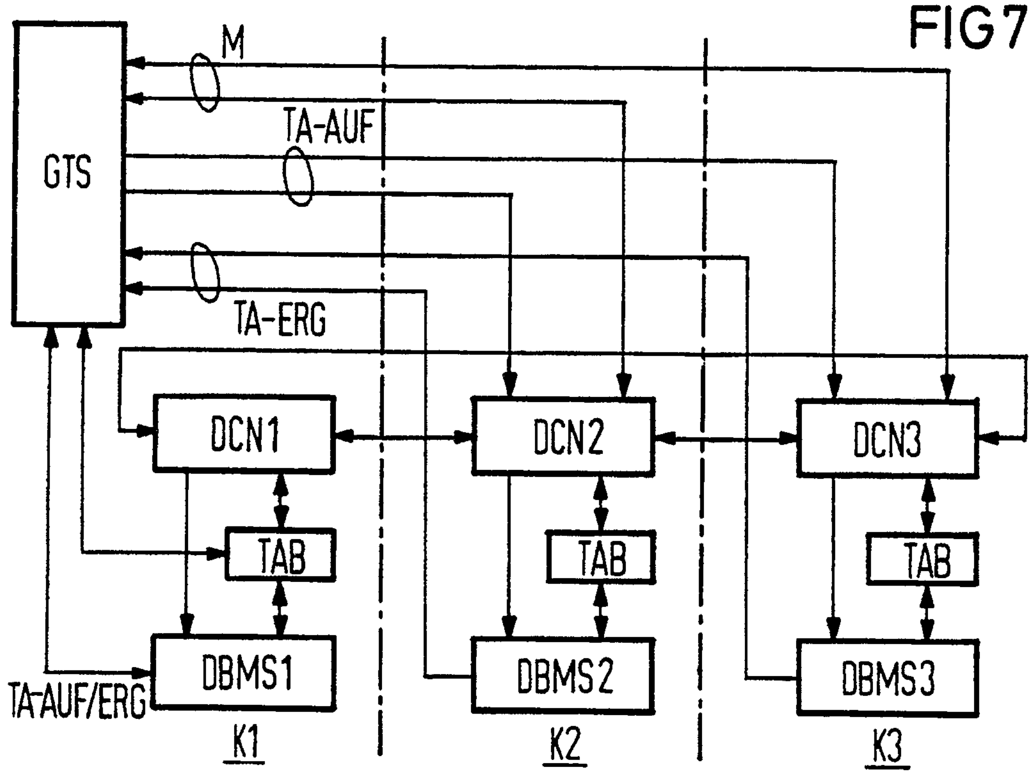

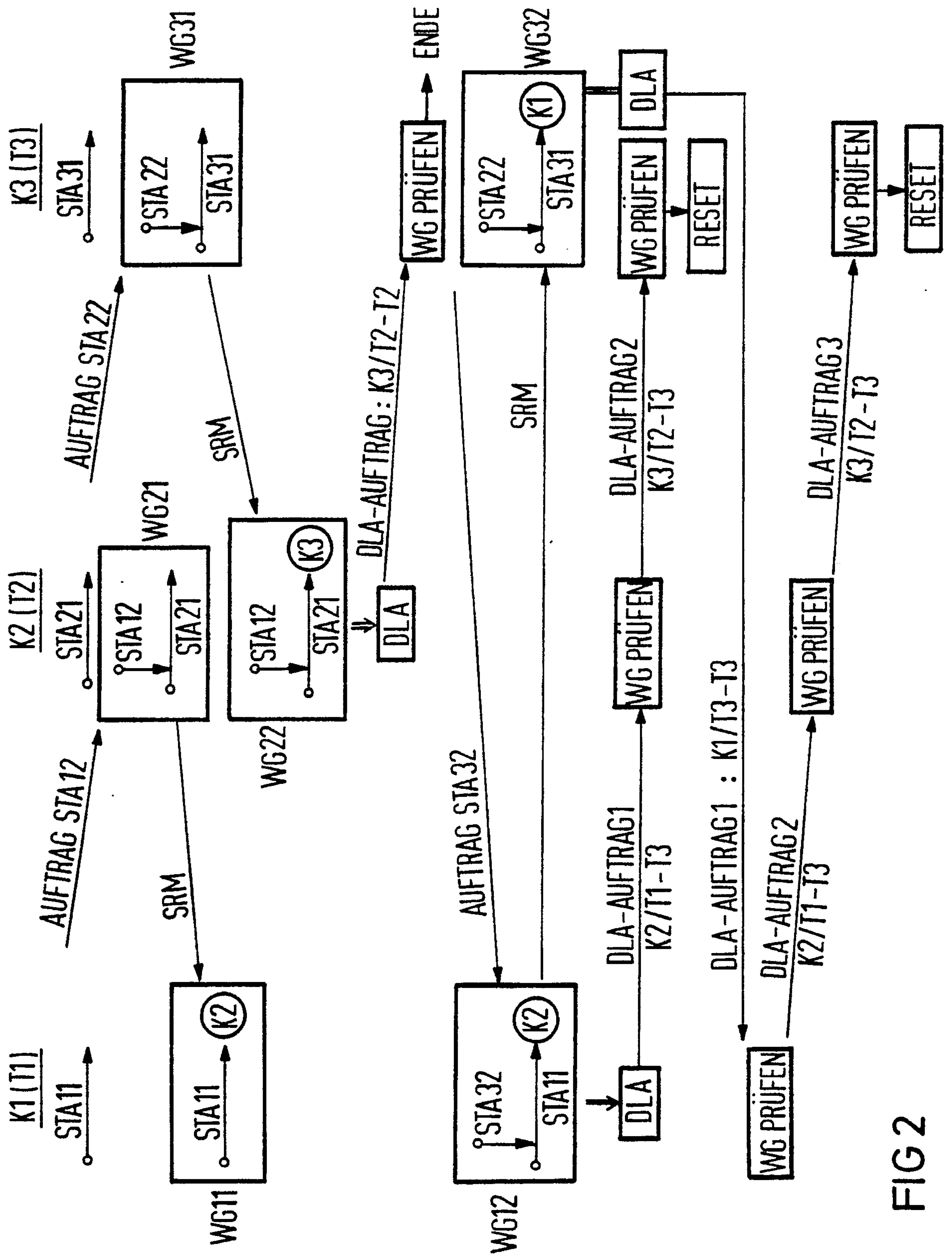

K1 (T1)
STA11
WG11
K2
SRM
AUFTRAG STA12
K2 (T2)
STA21
STA12
WG21
WG22
K3
DLA
AUFTRAG STA22
K3 (T3)
STA31
STA22
WG31
DLA-AUFTRAG : K3/T2-T2
WG PRÜFEN
ENDE
WG12
STA32
AUFTRAG STA32
WG32
K1
DLA-AUFTRAG1
K2/T1-T3
DLA-AUFTRAG2
K3/T2-T3
RESET
DLA-AUFTRAG1 : K1/T3-T3
DLA-AUFTRAG3


FIG 2

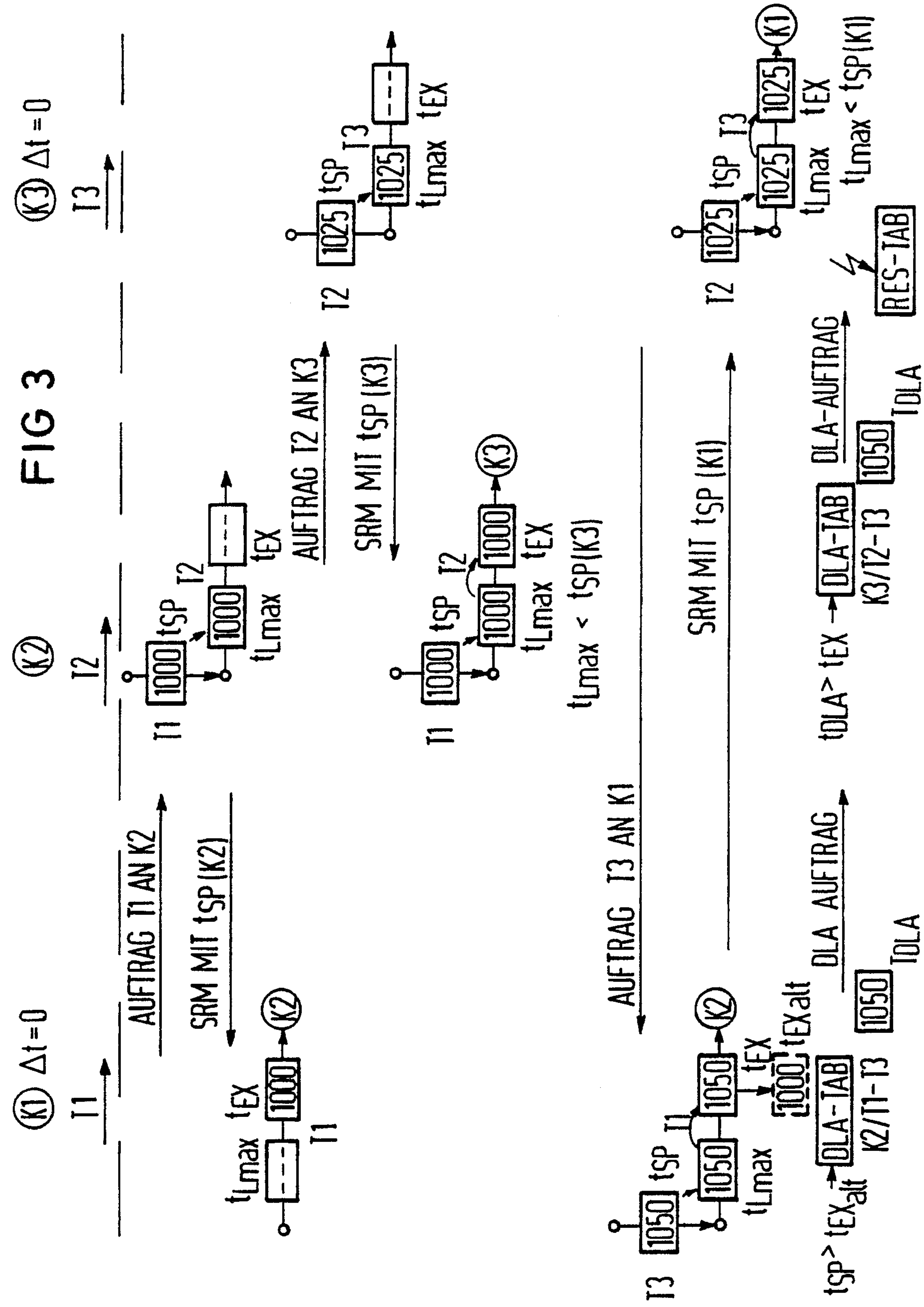
K1 Δt=0
T1
AUFTRAG T1 AN K2
SRM MIT tSP(K2)
tLmax tEX
1000
K2
T2
tSP
tLmax
tEX
AUFTRAG T2 AN K3
SRM MIT tSP(K3)
tLmax < tSP(K3)
K3
K3 Δt=0
T3
1025
tLmax < tSP(K1)
AUFTRAG T3 AN K1
SRM MIT tSP(K1)
1050
tEXalt
tSP > tEXalt
DLA-TAB
K2/T1-T3
DLA AUFTRAG
TDLA
tDLA > tEX
K3/T2-T3
DLA-AUFTRAG
RES-TAB
K1

FIG 3

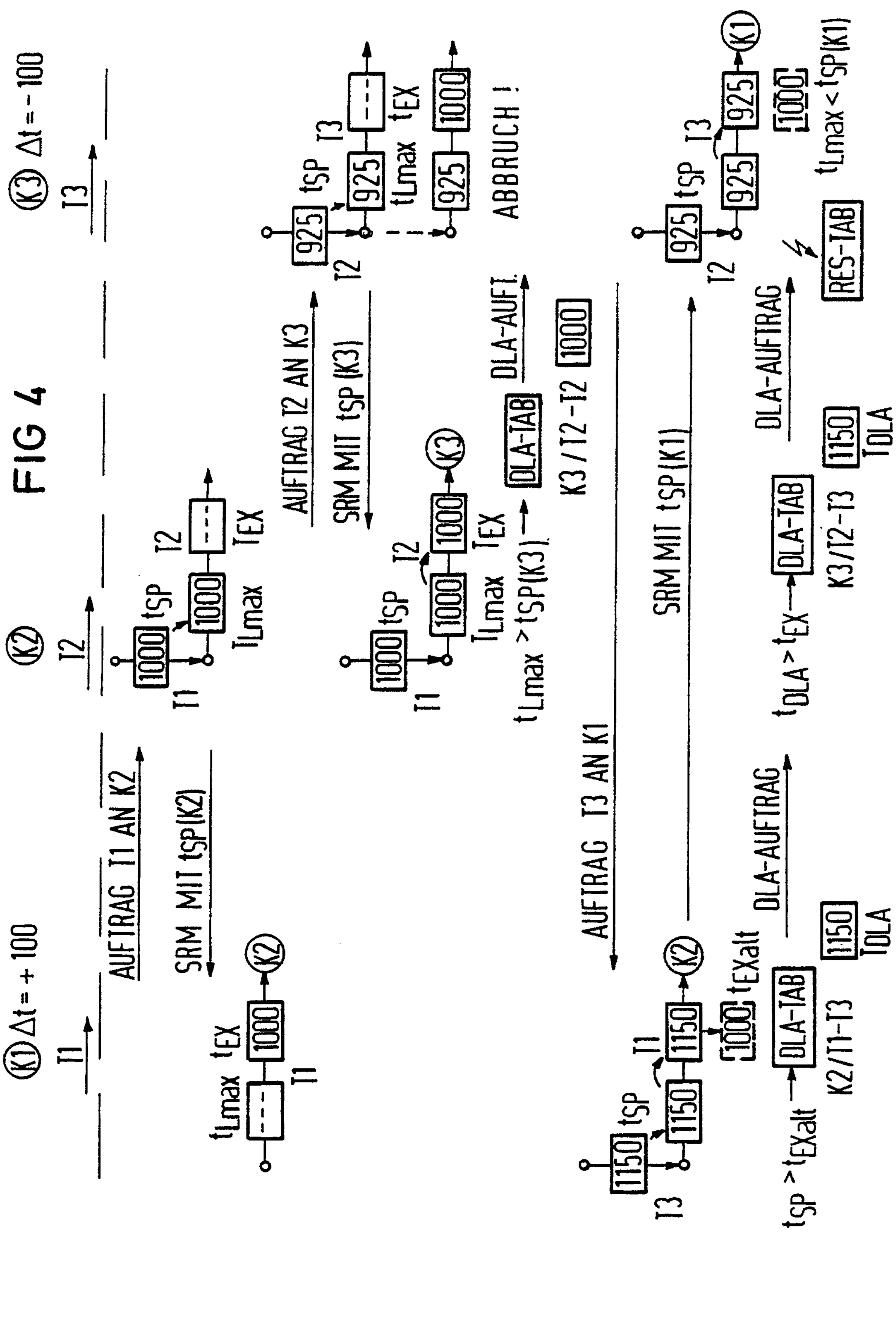

K1 Δt = + 100
K2
K3 Δt = - 100
T1
T2
T3
AUFTRAG T1 AN K2
SRM MIT tSP(K2)
tLmax
tEX
1000
tSP
TLmax
TEX
AUFTRAG T2 AN K3
SRM MIT tSP(K3)
tLmax > tSP(K3)
DLA-TAB
DLA-AUFT.
K3 / T2-T2
925
ABBRUCH !
AUFTRAG T3 AN K1
SRM MIT tSP(K1)
1150
tEXalt
tSP > tEXalt
K2/T1-T3
DLA-AUFTRAG
TDLA
tDLA > tEX
K3/T2-T3
RES-TAB
tLmax < tSP(K1)


FIG 4

FIG 5

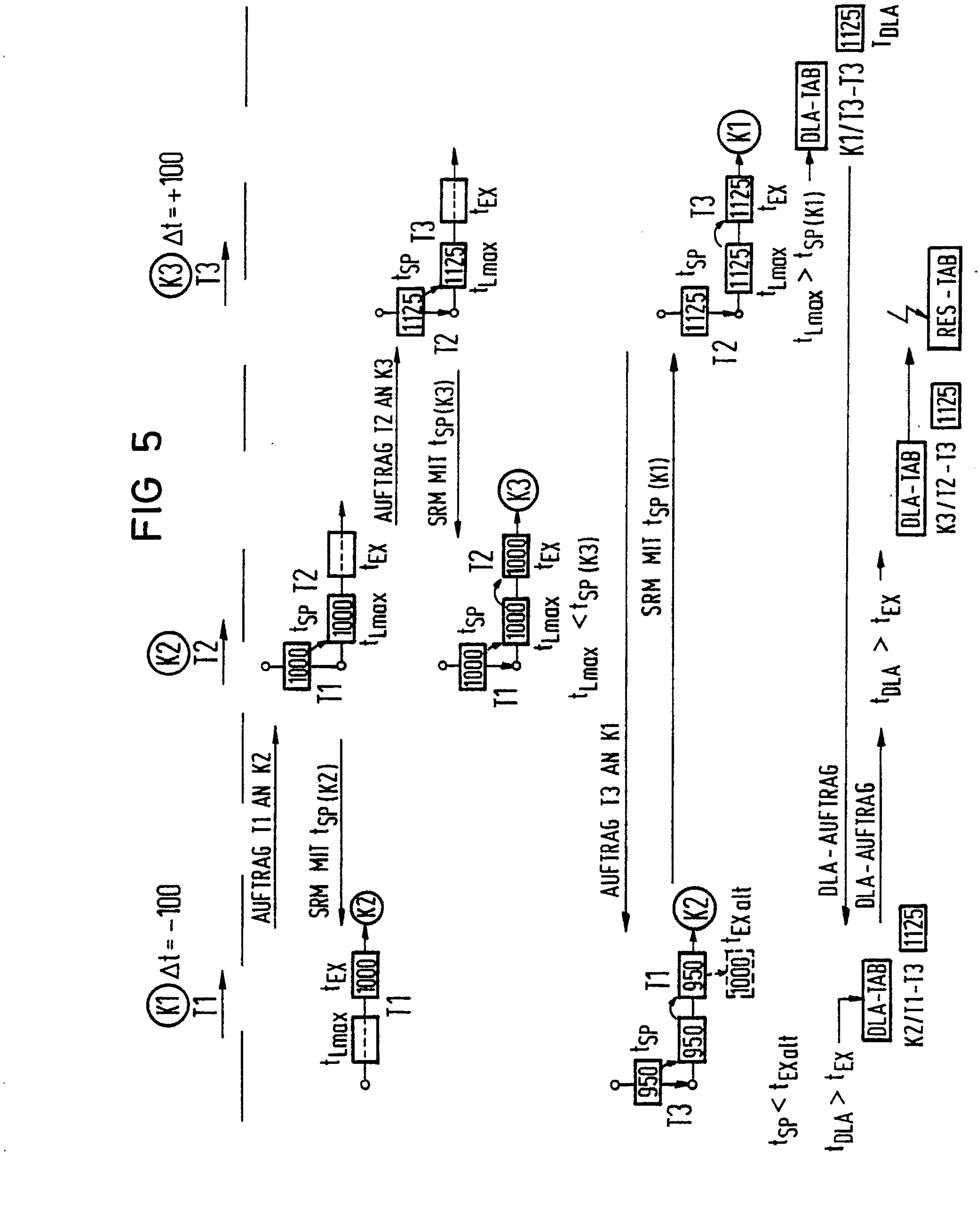
K1 Δt = -100
T1
K2
T2
K3 Δt = +100
T3
AUFTRAG T1 AN K2
SRM MIT $t_{SP}$ (K2)
$t_{Lmax}$
$t_{EX}$
1000
$t_{SP}$
AUFTRAG T2 AN K3
SRM MIT $t_{SP}$ (K3)
$t_{Lmax}$ < $t_{SP}$ (K3)
1125
AUFTRAG T3 AN K1
SRM MIT $t_{SP}$ (K1)
950
$t_{EX\,alt}$
$t_{SP}$ < $t_{EX\,alt}$
$t_{Lmax}$ > $t_{SP}$ (K1)
DLA-AUFTRAG
DLA-AUFTRAG
$t_{DLA}$ > $t_{EX}$
DLA-TAB
K2/T1-T3
K3/T2-T3
K1/T3-T3
RES-TAB
$T_{DLA}$

FIG 8A

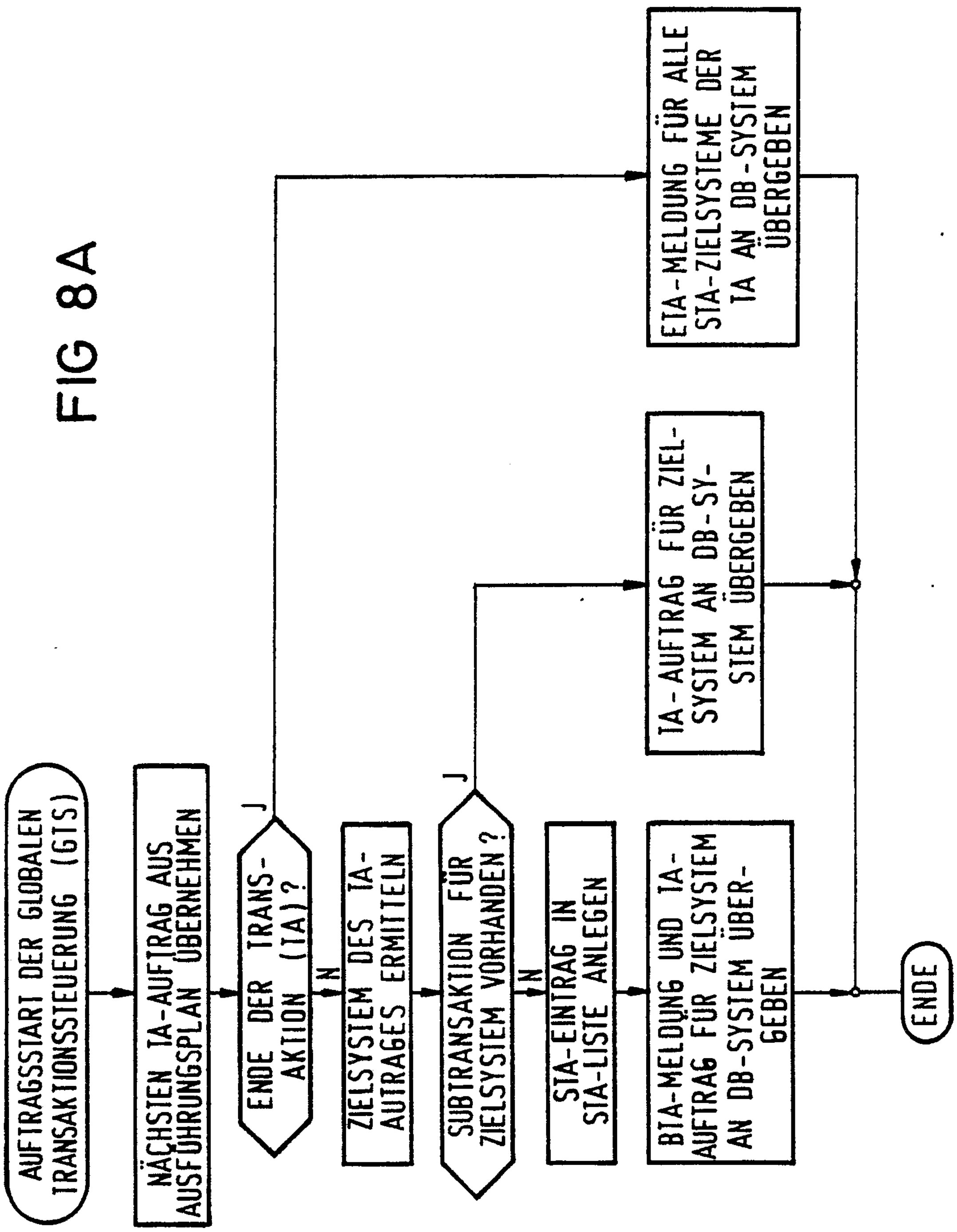

AUFTRAGSSTART DER GLOBALEN TRANSAKTIONSSTEUERUNG (GTS)
NÄCHSTEN TA-AUFTRAG AUS AUSFÜHRUNGSPLAN ÜBERNEHMEN
ENDE DER TRANSAKTION (TA)?
J
N
ZIELSYSTEM DES TA-AUTRAGES ERMITTELN
SUBTRANSAKTION FÜR ZIELSYSTEM VORHANDEN?
J
N
STA-EINTRAG IN STA-LISTE ANLEGEN
BTA-MELDUNG UND TA-AUFTRAG FÜR ZIELSYSTEM AN DB-SYSTEM ÜBERGEBEN
TA-AUFTRAG FÜR ZIELSYSTEM AN DB-SYSTEM ÜBERGEBEN
ETA-MELDUNG FÜR ALLE STA-ZIELSYSTEME DER TA AN DB-SYSTEM ÜBERGEBEN
ENDE

FIG 8B

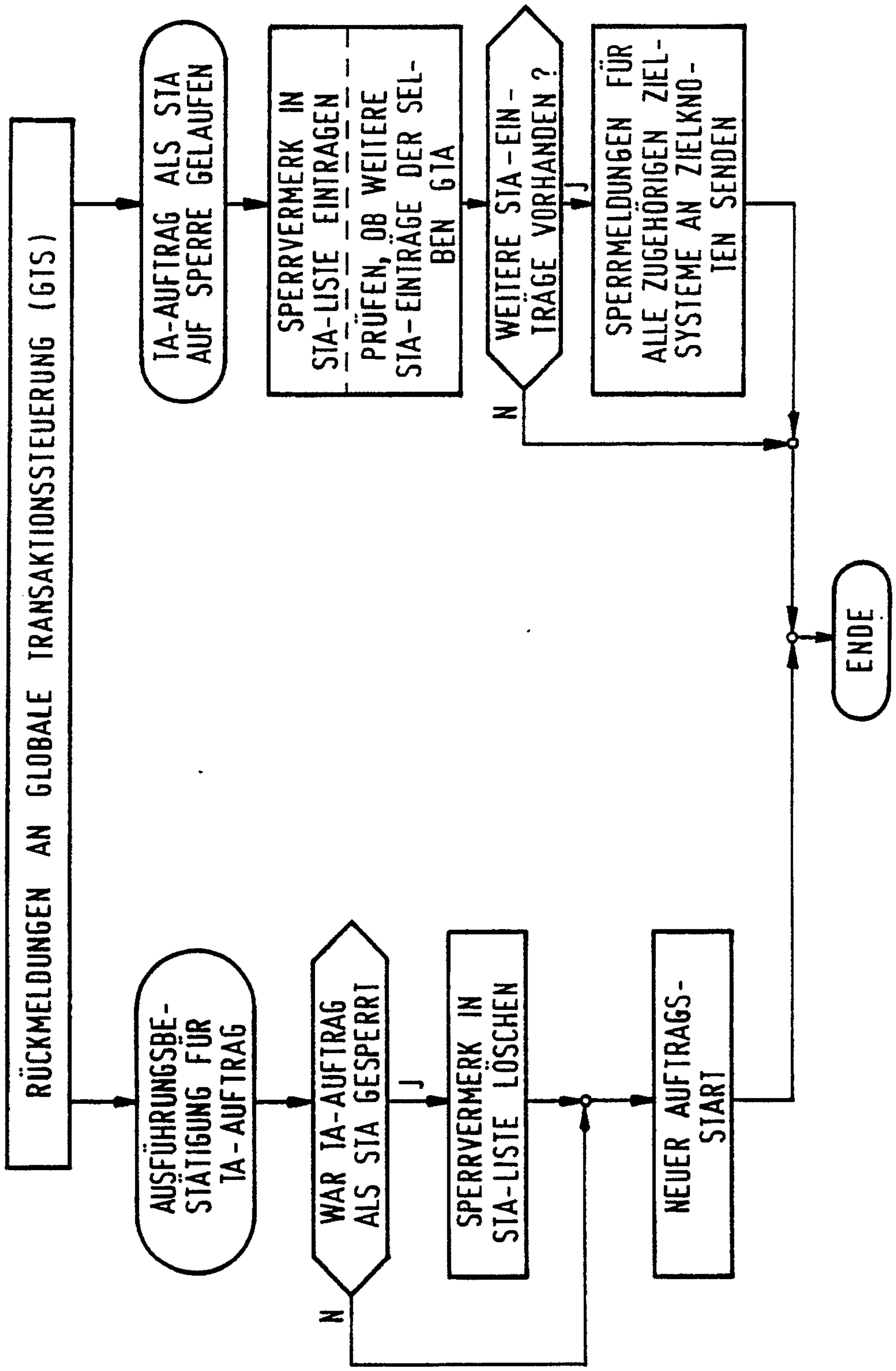
RÜCKMELDUNGEN AN GLOBALE TRANSAKTIONSSTEUERUNG (GTS)
AUSFÜHRUNGSBESTÄTIGUNG FÜR TA-AUFTRAG
WAR TA-AUFTRAG ALS STA GESPERRT
J
N
SPERRVERMERK IN STA-LISTE LÖSCHEN
NEUER AUFTRAGSSTART
TA-AUFTRAG ALS STA AUF SPERRE GELAUFEN
SPERRVERMERK IN STA-LISTE EINTRAGEN
PRÜFEN, OB WEITERE STA-EINTRÄGE DER SELBEN GTA
WEITERE STA-EINTRÄGE VORHANDEN ?
J
N
SPERRMELDUNGEN FÜR ALLE ZUGEHÖRIGEN ZIELSYSTEME AN ZIELKNOTEN SENDEN
ENDE

FIG 9

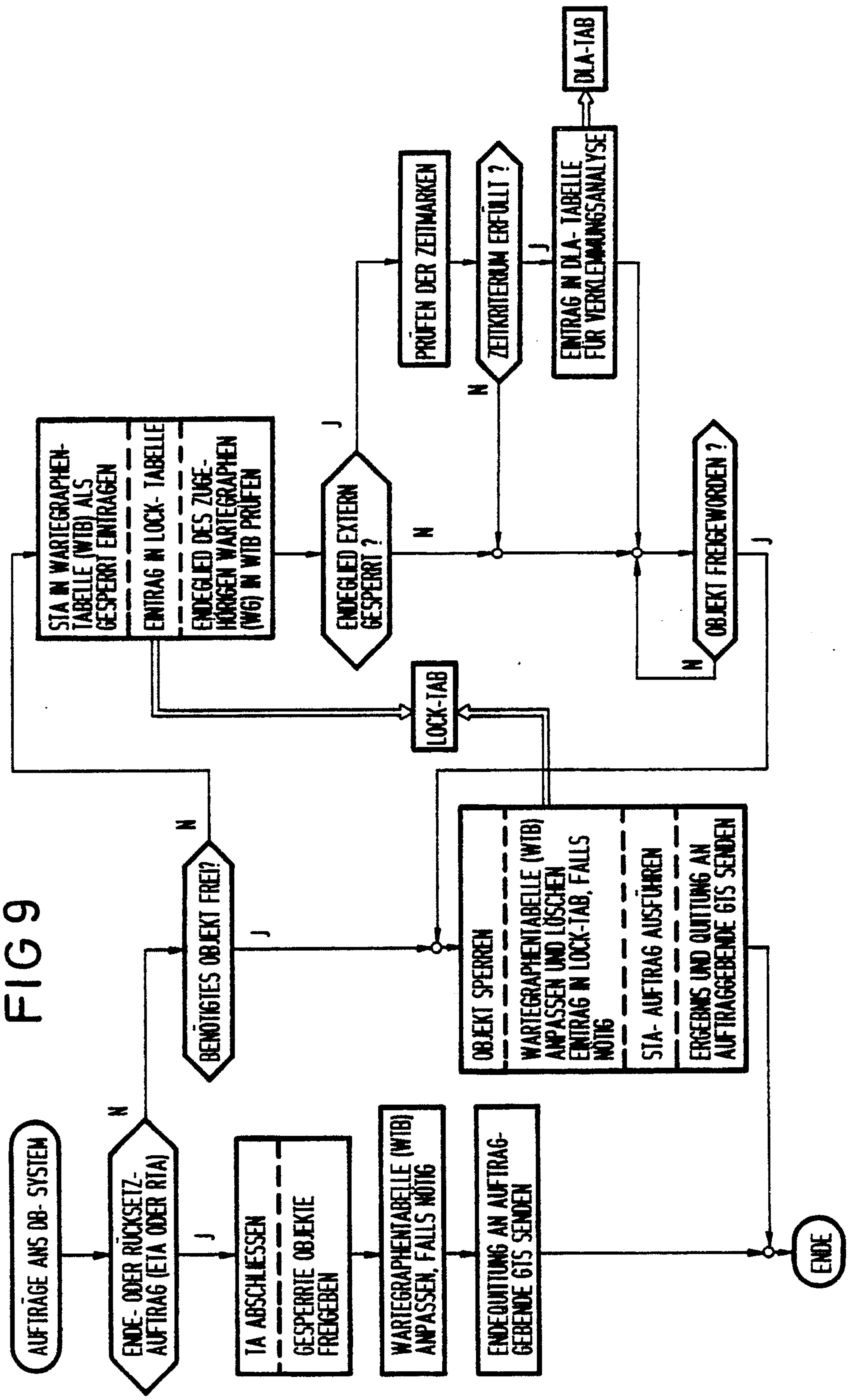
AUFTRÄGE ANS DB- SYSTEM
ENDE- ODER RÜCKSETZ-AUFTRAG (ETA ODER RTA)
J
N
TA ABSCHLIESSEN
GESPERRTE OBJEKTE FREIGEBEN
WARTEGRAPHENTABELLE (WTB) ANPASSEN, FALLS NÖTIG
ENDEQUITTUNG AN AUFTRAG-GEBENDE GTS SENDEN
ENDE
BENÖTIGTES OBJEKT FREI?
J
N
OBJEKT SPERREN
WARTEGRAPHENTABELLE (WTB) ANPASSEN UND LÖSCHEN EINTRAG IN LOCK-TAB, FALLS NÖTIG
STA- AUFTRAG AUSFÜHREN
ERGEBNIS UND QUITTUNG AN AUFTRAGGEBENDE GTS SENDEN
LOCK-TAB
STA IN WARTEGRAPHEN-TABELLE (WTB) ALS GESPERRT EINTRAGEN
EINTRAG IN LOCK- TABELLE
ENDEGLIED DES ZUGE-HÖRIGEN WARTEGRAPHEN (WG) IN WTB PRÜFEN
ENDEGLIED EXTERN GESPERRT ?
J
N
PRÜFEN DER ZEITMARKEN
ZEITKRITERIUM ERFÜLLT ?
J
N
EINTRAG IN DLA- TABELLE FÜR VERKLEMMUNGSANALYSE
DLA-TAB
OBJEKT FREIGEWORDEN ?
J
N

FIG10

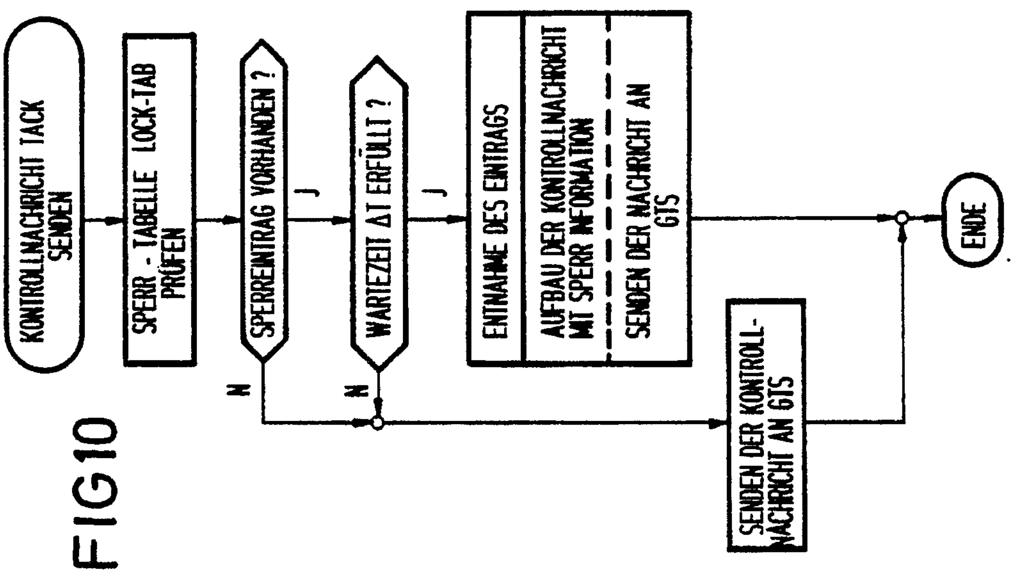
KONTROLLNACHRICHT TACK SENDEN
SPERR - TABELLE LOCK-TAB PRÜFEN
SPERREINTRAG VORHANDEN ?
J
N
WARTEZEIT ΔT ERFÜLLT ?
J
N
ENTNAHME DES EINTRAGS
AUFBAU DER KONTROLLNACHRICHT MIT SPERR INFORMATION
SENDEN DER NACHRICHT AN GTS
SENDEN DER KONTROLL-NACHRICHT AN GTS
ENDE

FIG 11

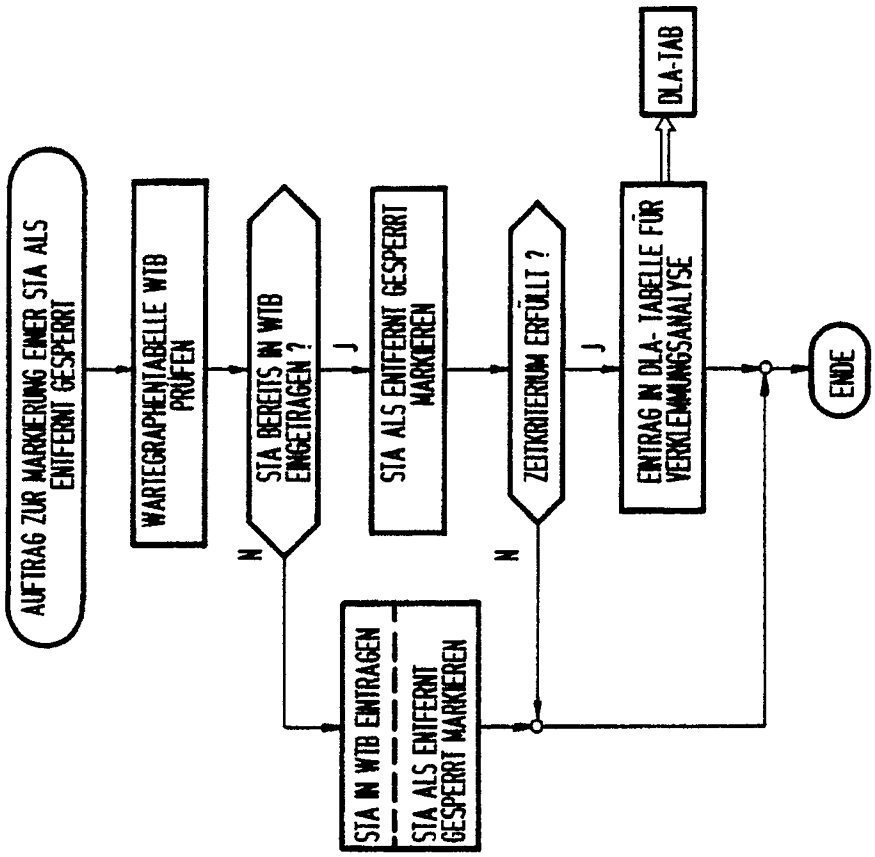
AUFTRAG ZUR MARKIERUNG EINER STA ALS ENTFERNT GESPERRT
WARTEGRAPHENTABELLE WTB PRÜFEN
STA BEREITS IN WTB EINGETRAGEN ?
J
N
STA ALS ENTFERNT GESPERRT MARKIEREN
ZEITKRITERIUM ERFÜLLT ?
J
N
EINTRAG IN DLA- TABELLE FÜR VERKLEMMUNGSANALYSE
DLA-TAB
STA IN WTB EINTRAGEN
STA ALS ENTFERNT GESPERRT MARKIEREN
ENDE

FIG 12

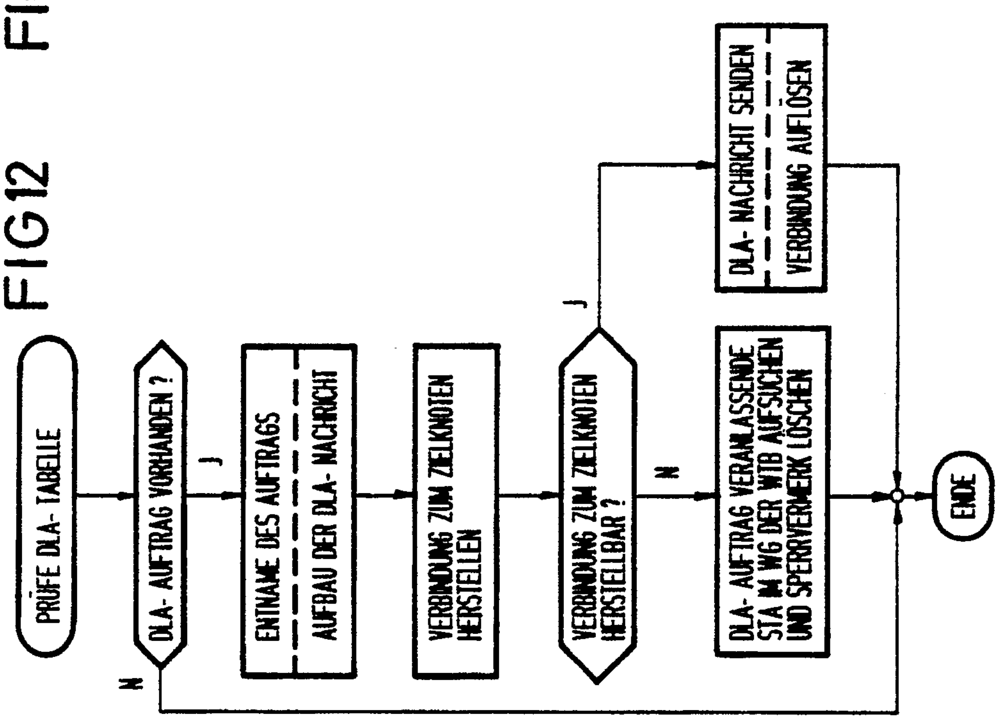
PRÜFE DLA-TABELLE
DLA-AUFTRAG VORHANDEN ?
J
N
ENTNAME DES AUFTRAGS
AUFBAU DER DLA-NACHRICHT
VERBINDUNG ZUM ZIELKNOTEN HERSTELLEN
VERBINDUNG ZUM ZIELKNOTEN HERSTELLBAR ?
J
N
DLA-NACHRICHT SENDEN
VERBINDUNG AUFLÖSEN
DLA-AUFTRAG VERANLASSENDE STA IM WG DER WTB AUFSUCHEN UND SPERRVERMERK LÖSCHEN
ENDE

FIG 13

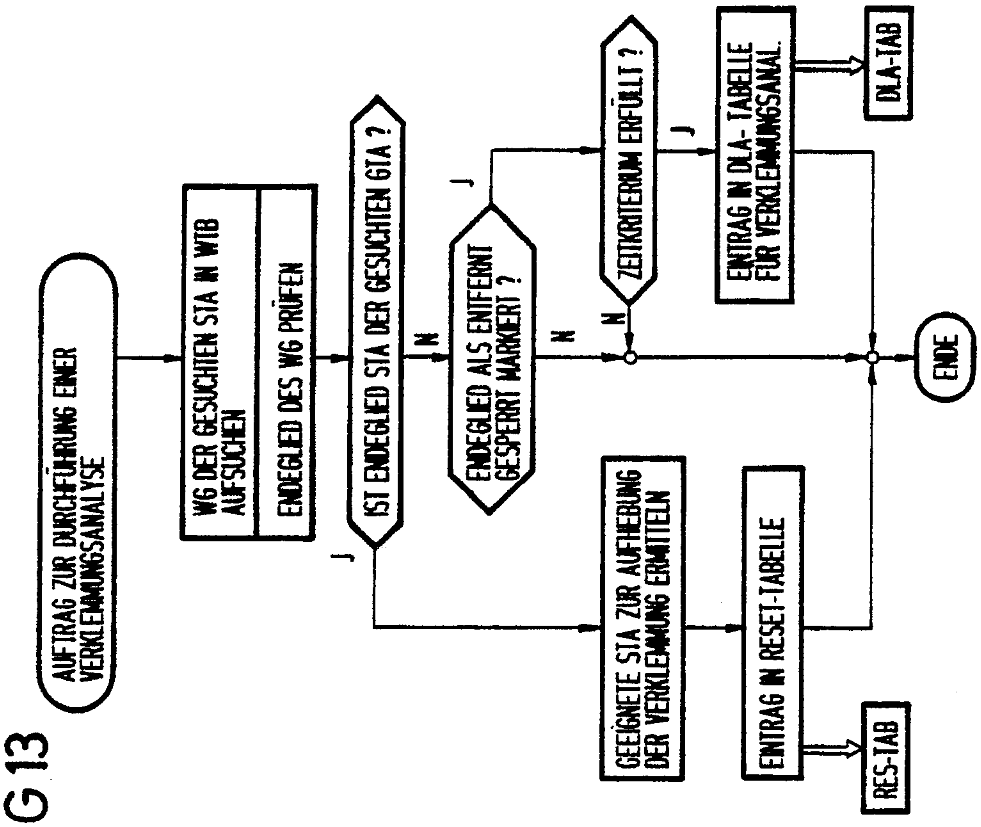
AUFTRAG ZUR DURCHFÜHRUNG EINER VERKLEMMUNGSANALYSE
WG DER GESUCHTEN STA IN WTB AUFSUCHEN
ENDEGLIED DES WG PRÜFEN
IST ENDEGLIED STA DER GESUCHTEN GTA ?
J
N
ENDEGLIED ALS ENTFERNT GESPERRT MARKIERT ?
J
N
ZEITKRITERIUM ERFÜLLT ?
J
N
ENTRAG IN DLA-TABELLE FÜR VERKLEMMUNGSANAL.
DLA-TAB
GEEIGNETE STA ZUR AUFHEBUNG DER VERKLEMMUNG ERMITTELN
ENTRAG IN RESET-TABELLE
RES-TAB
ENDE

FIG 14

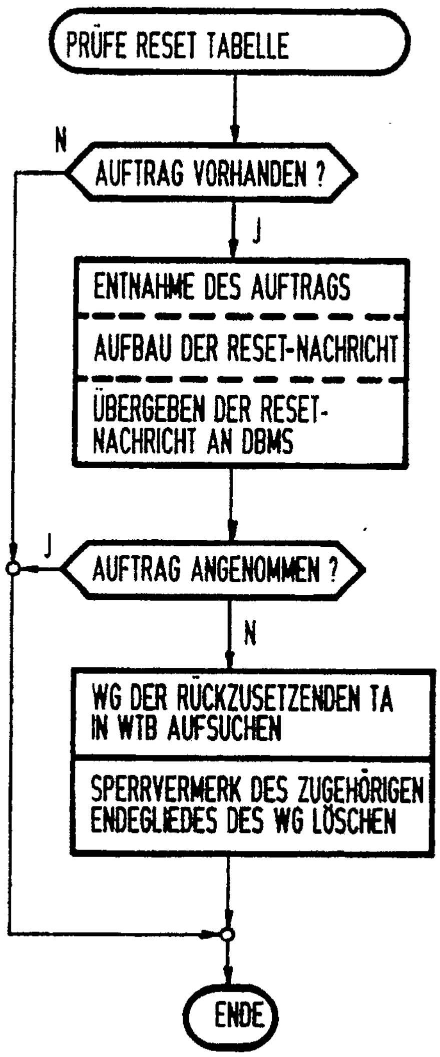
PRÜFE RESET TABELLE
AUFTRAG VORHANDEN ?
N
J
ENTNAHME DES AUFTRAGS
AUFBAU DER RESET-NACHRICHT
ÜBERGEBEN DER RESET-NACHRICHT AN DBMS
AUFTRAG ANGENOMMEN ?
J
N
WG DER RÜCKZUSETZENDEN TA IN WTB AUFSUCHEN
SPERRVERMERK DES ZUGEHÖRIGEN ENDEGLIEDES DES WG LÖSCHEN
ENDE

## FIG 15

WTB

(K1)

| | TA-ID | F-AD | ZUSTAND | ZIEL | $ZEIT_L$ | $ZEIT_{EX}$ |
|---|---|---|---|---|---|---|
| 1 | T1 | — | ENTF. GESP. | K2 | 1080 | 1000 |
| 2 | XXX | | | | | |
| 3 | XXX | | | | | |
| 4 | T3 | 1 | GESPERRT | — | 1050 | — |
| 5 | $T_X$ | 4 | GESPERRT | — | 1080 | — |
| | | | | | | |

## FIG 16

LOCK -TAB

(K2)

| GTS-ID | TA-ID | $ORT_{SP}$ | $ZEIT_{SP}$ |
|---|---|---|---|
| AB | T1 | K2 | 1000 |
| | | | |
| | | | |

## FIG 17

DLA-TAB

(K1)

| DCN-ID | $TA\text{-}ID_{EIN}$ | $TA\text{-}ID_{DLA}$ | $ZEIT_{DLA}$ |
|---|---|---|---|
| GH-K2 | T1 | T3 | 1050 |
| | | | |
| | | | |